(19) **Europäisches Patentamt European Patent Office Office européen des brevets**

(11) **EP 4 704 423 A1**

(12) **EUROPEAN PATENT APPLICATION**

(43) Date of publication:
04.03.2026 Bulletin 2026/10

(21) Application number: 24306429.2

(22) Date of filing: 02.09.2024

(51) International Patent Classification (IPC):
*H04N 21/234* (2011.01)        *H04N 21/44* (2011.01)
*H04N 21/81* (2011.01)        *H04N 21/854* (2011.01)

(52) Cooperative Patent Classification (CPC):
**H04N 21/23412; H04N 21/44012; H04N 21/8146;
H04N 21/85406;** G06T 13/40; G06T 2210/36;
H04N 21/234327

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **GOSSELIN, Philippe Henri**
**35235 THORIGNE-FOUILLARD (FR)**

• **COVA REGATEIRO, João Pedro**
**35220 CHATEAUBOURG (FR)**
• **LE CLERC, Francois**
**35590 L'HERMITAGE (FR)**
• **AVRIL, Quentin**
**35830 BETTON (FR)**
• **GUILLOTEL, Philippe**
**35770 VERN SUR SEICHE (FR)**

(74) Representative: **Interdigital**
**Immeuble ZEN 2**
**845 A, avenue des Champs Blancs**
**35510 Cesson-Sévigné (FR)**

(54) **GRAPHICS LIBRARY TRANSMISSION FORMAT-BASED AVATAR INTERCHANGE FORMAT**

(57)    An example device (e.g., a decoder) may determine that an avatar representation is associated with one or more extensions. The device may parse a level of details (LOD) extension based on the determination that the avatar representation is associated with the one or more extensions. The device may determine whether to obtain mesh data associated with the LOD extension from a first data container or a second data container. The first data container may be associated with a root node. The second data container may be associated with an extension node. The first data container may be associated with a first data format. The second data container may be associated with a second data format. The device may obtain the mesh data associated with the LOD extension. The device may decode at least the mesh data associated with the LOD extension to generate the avatar representation.

FIG. 7

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

System, methods, and instrumentalities are disclosed for decoding and encoding an avatar representation.

An example device (e.g., a decoder) may determine that an avatar representation is associated with one or more extensions. The device may parse a level of details (LOD) extension based on the determination that the avatar representation is associated with the one or more extensions (e.g., if the one or more extensions includes an LOD extension). The device may determine whether to obtain mesh data associated with the LOD extension from a first data container or a second data container. The first data container may be associated with a root node. The second data container may be associated with an extension node. The first data container may be associated with a first data format (e.g., glTF). The second data container may be associated with a second data format (e.g., AJIF). The device may obtain the mesh data associated with the LOD extension. The device may decode at least the mesh data associated with the LOD extension to generate the avatar representation.

In examples, based on a determination that a mesh glTF property is associated with the LOD extension, the device may obtain the mesh data associated with the LOD extension from the first data container. The device may determine that the mesh data associated with the LOD extension is in the first data format based on the determination that the mesh glTF property is associated with the LOD extension. The device may parse a glTF 2.0 file (e.g., including the first data container and the second data container) associated with the avatar representation to determine that the avatar representation is associated with the one or more extensions.

In example, the second data container may be configured for containing data of a greater level of complexity than the first data container. For example, the second data container may be configured to contain triangle-based mesh data and quad-based mesh data, and the first data container may be configured to contain the triangle-based mesh data (e.g., without the quad-based mesh data). In some examples, the second data container may include at least one data that is the same as data in the first data container.

An example device (e.g., an encoder) may determine a subset of extensions associated with an avatar representation, wherein the subset of extensions comprises an LOD extension. The device may obtain a first version of mesh data associated with the LOD extension. The device may obtain a second version of the mesh data. The device may store the first version of the mesh data in a first data container and the second version of the mesh data in a second data container. The first data container may be associated with a first data format, and the second data container may be associated with a second data format. The device may include the first data container and the second data container in a file associated with the LOD extension. The device may send the file associated with the LOD extension.

In examples, the first data container may be associated with a root node of the avatar representation, and the second data container may be associated with an extension node of the avatar representation. For example, the second data container may be configured for containing data of a greater level of complexity than the first data container. The first data format may be a glTF format, and the second data format may be a non glTF format. In examples, the first version of the mesh data may be in the first data format, and the second version of the mesh data may be in the second data format.

In some examples, a property type indication may be used to indicate whether the mesh data associated with the LOD extension is in the first data format or the second data format. For example, if the value of the property type indication indicates the mesh data associated with the LOD extension is in the first data format, the first data container may be used to contain the mesh data associated with the LOD extension. If a value of the property type indication indicates the mesh data associated with the LOD extension is in the second data format, the second data container may be used to contain the mesh data associated with the LOD extension.

**BRIEF DESCRIPTION OF THE DRAWINGS**

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example of retro compatibility according to an embodiment.

FIG. 6 illustrates an example of creating an avatar glTF file according to an embodiment.

FIG. 7 illustrates an example of loading an avatar glTF file according to an embodiment.

FIG. 8 illustrates an example of parsing a glTF file with avatar extensions according to an embodiment.

FIG. 9 illustrates an example of parsing a LOD in MPEG_avatar_lods according to an embodiment.

FIG. 10 illustrates an example of parsing a Controller in MPEG_avatar_controllers according to an embodiment.

FIG. 11 illustrates an example of parsing a Channel in a Controller of MPEG_avatar_controllers according to an embodiment.

FIG. 12 illustrates an example of parsing a Skeleton in MPEG_avatar_skeletons according to an embodiment.

FIG. 13 illustrates an example of parsing a Skinning in a Skeleton of MPEG_avatar_skeletons according to an embodiment.

FIG. 14 illustrates an example of parsing a Node in MPEG_avatar_nodes according to an embodiment.

FIG. 15 illustrates an example of an avatar mesh according to an embodiment.

## DETAILED DESCRIPTION

A more detailed understanding may be had from the following description, given by way of example in conjunction with the accompanying drawings.

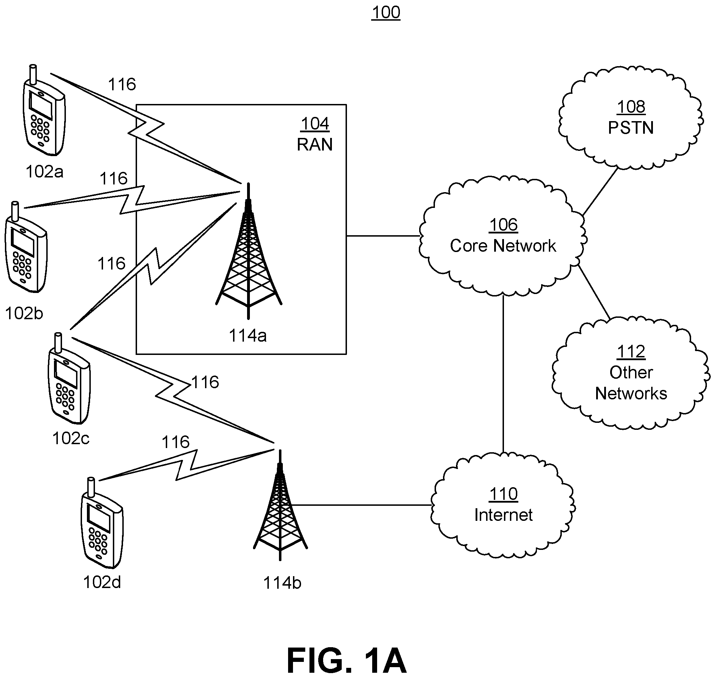

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location- based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

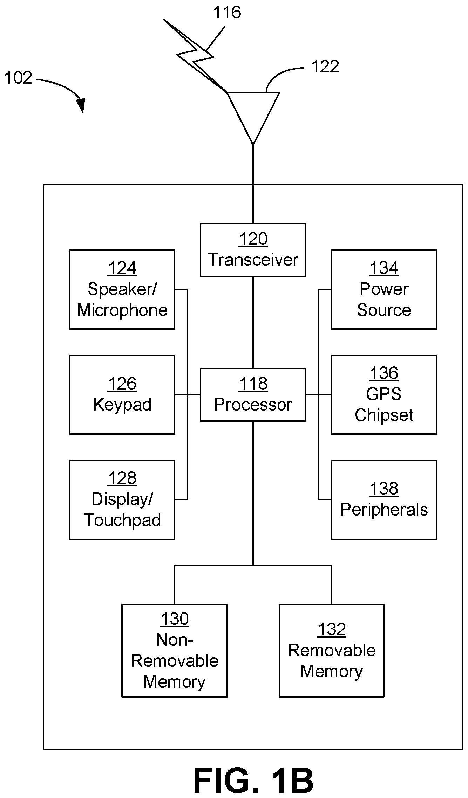

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received

5

from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

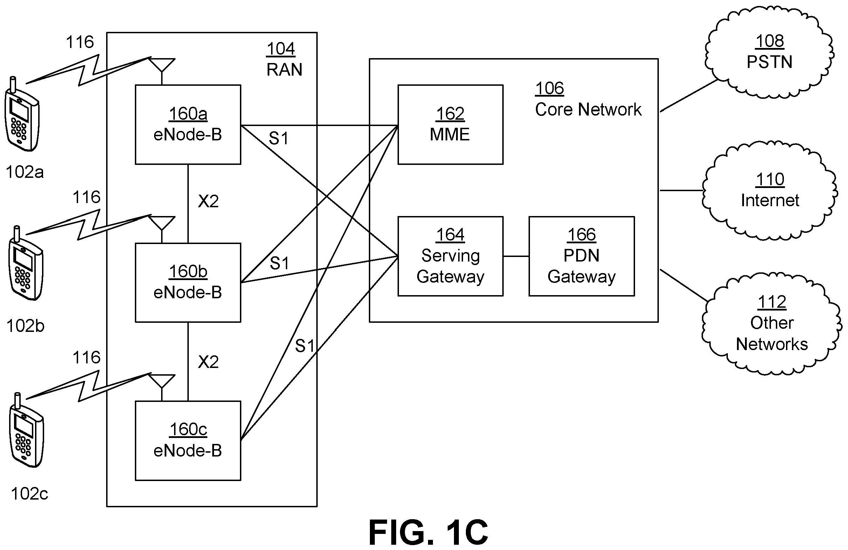

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11 af and 802.11 ah. The channel operating bandwidths, and carriers, are reduced in 802.11af and 802.11 ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11 ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

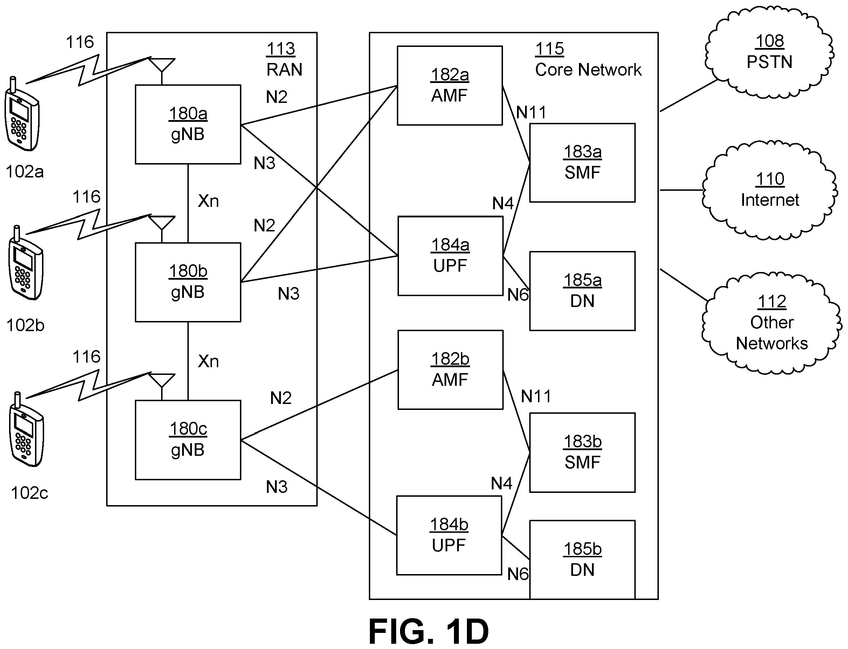

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 182 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

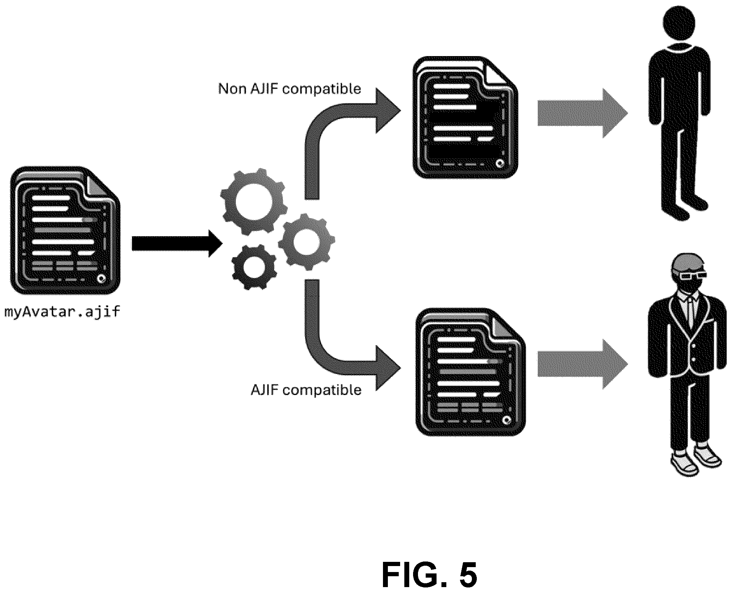

The aspects described and contemplated in this application may be implemented in many different forms. FIGS. 5-15 described herein may provide some examples, but other examples are contemplated. The discussion of FIGS. 5-15 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding." Use of such terms does not imply an ordering to the modified operations unless specifically required. So, in this example, the first decoding need not be performed before the second decoding, and may occur, for example, before, during, or in an overlapping time period with the second decoding.

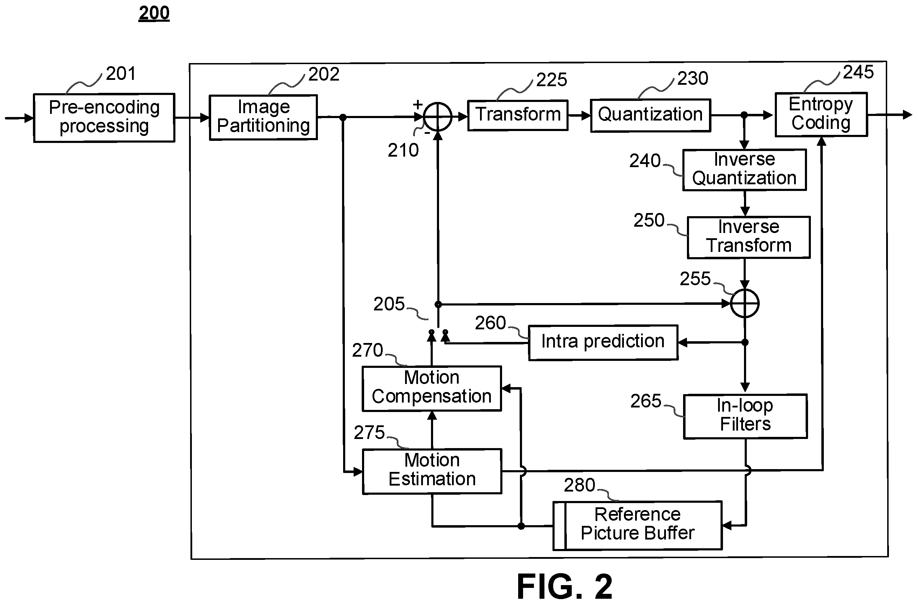

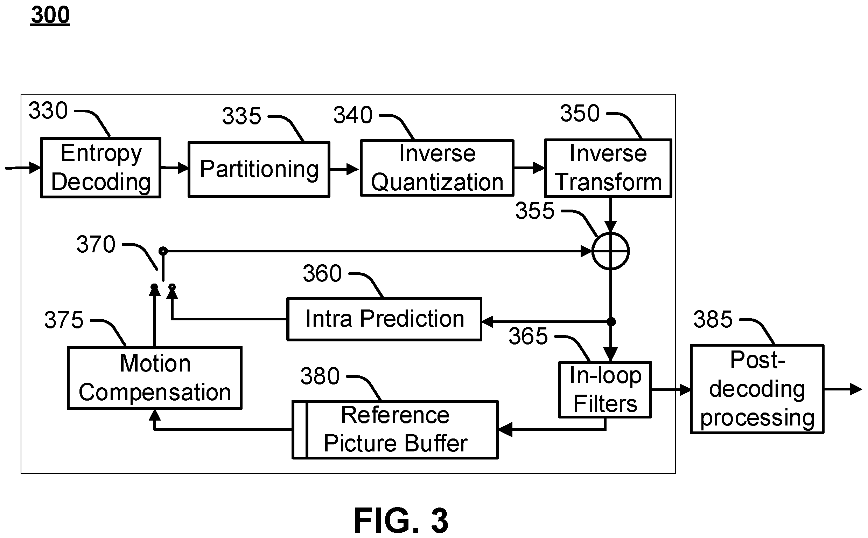

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as version numbers, string lengths, number of bytes, number of bits, bit values, number of tensors, number of tuples, image size, color values, byte positions, byte lengths, offsets, dimensions, constants, multipliers, pixel coordinates, decoded values, number of vertices, number of faces, face range, orders, type values, number of body parts, minimums, maximums, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

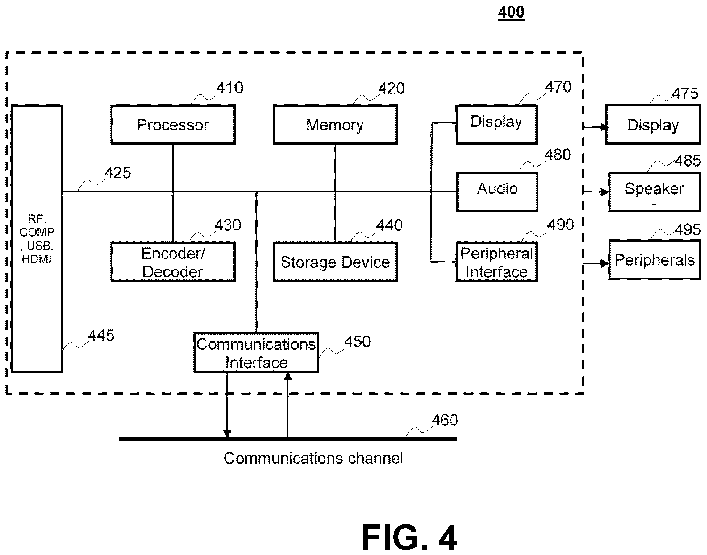

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, parsing an extension; determining whether to obtain data associated with the extension from a first data container or a second data container (e.g., the first data container may be associated with a first data format, and the second data container may be associated with a second data format); obtaining the data associated with the extension; decoding the data associated with the extension; determining that an avatar representation is associated with one or more extensions; parsing a level of details (LOD) extension based on the determination that the avatar representation is associated with the one or more extensions (e.g., if the one or more extensions includes an LOD extension); determining whether to obtain mesh data associated with the LOD extension from a first data container or a second data container; determining that the first data container is associated with a root node; determining that the second data container id associated with an extension node; determining that the first data container is associated with a first data format (e.g., gITF); determining that the second data container is associated with a second data format (e.g., AJIF); obtaining the mesh data associated with the LOD extension; decoding at least the mesh data associated with the LOD extension to generate the avatar representation; etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, determining whether to use a first data container or a second data container to include data (e.g., of a certain version) associated with an extension (e.g., the first data container may be associated with a first data format, and the second data container may be associated with a second data format); including the data associated with the extension in the first or second data container based on the determination; indicating the first or second data container for including the data associated with the extension; determining a subset of extensions associated with an avatar representation; determining that the subset of extensions includes a level of details (LOD) extension; obtaining a first version of mesh data associated with the LOD extension; obtaining a second version of the mesh data; storing the first version of the mesh data in a first data container and the second version of the mesh data in a second data container; including the first data container and the second data container in a file associated with the LOD extension; sending the file associated with the LOD extension; determining whether to use a first data container or a second data container to contain mesh data (e.g., of a certain version) associated with the LOD extension; determining that the first data container is associated with a first data format; determining that the second data container is associated with a second data format; including the mesh data associated with the LOD extension in the first or second data container; indicating the first or second data container for containing the mesh data associated with the LOD extension; etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as MPEG_geometries, extensionsRequired, MPEG_node_avatar, byteLength, dims, dtype, ctype, mimeType, itype, verticesGltf, normalsGltf, uvsGltf, blendshapes, MPEG_avatar_rawdata, colorsGltf, verticesType, verticesSource, colorsType, colorsSource, normalsType, normalsSource, uvsType, uvsSource, displacementsGltf, displacementsType, displacementsSource, imageGltf, imageType, imageSource, geometryGltf, childrenGltf, geometry Type, geometrySource, childrenType, childrenSource, rootGltf, jointsGltf, InverseBindMatrices, inverseBindMatricesGitf, rootType, rootSource, jointsType, jointsSource, meshGltf, weightsGltf, inputType, InputSource, nodeGltf, outputGltf, animation Type, skeletonType, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, geometry (e.g., mesh), geometry type, geometry source, nodes, mappings, children, scale, rotation, translation, vertices type, vertices source, colors type, colors source, colors Gltf, normal type, normal source, uvs type, uvs source, faces, blendshapes, textures, displacements type, displacements source, image type, image source, root type, root source, joints type, joints source, skinnings, bindings, weights, inputs, outputs, channels, animations, controllers, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

System, methods, and instrumentalities are disclosed for decoding and encoding an avatar representation.

A device (e.g., an encoder) may chooses to encode data in various formats (e.g., in only gITF or gITF+AJIF). Some devices (e.g., a first decoder) may be non AJIF compatible, and/or some devices (e.g., a second decoder) may be AJIF compatible. For example, the first decoder may ignore one or more extensions as described herein, and/or read in certain containers (e.g., gITF containers), for example, directly, no extensions. The second decoder may follow one or more extensions (e.g., decode what it is signaled). If in an extension, the signal may indicate that the data (e.g., mesh) is in a first data container (e.g., a gITF container), then the decoder may read from this container. Otherwise, the decoder may read from a second data container (e.g., the AJIF container). In some examples, the decoder may not choose what to decode (e.g., its nature may change what is decoded).

An example device (e.g., a decoder) may determine that an avatar representation is not associated with an extension (e.g., the avatar representation may be with limited feature(s)). In examples, a device (e.g., a decoder) may determine that an avatar representation is associated with one or more extensions. The device may parse a level of details (LOD) extension based on the determination that the avatar representation is associated with the one or more extensions (e.g., if the one or more extensions includes an LOD extension). The device may determine whether to obtain mesh data associated with the LOD extension from a first data container or a second data container. The first data container may be associated with a root node. The second data container may be associated with an extension node. The first data container may be associated with a first data format (e.g., gITF). The second data container may be associated with a second data format (e.g., AJIF). The device may obtain the mesh data associated with the LOD extension. The device may decode at least the mesh data associated with the LOD extension to generate the avatar representation. For example, the device may decoder one or more other components/data (e.g., blendshapes, textures, skeleton etc.,)

In examples, based on a determination that a mesh gITF property is associated with the LOD extension, the device may obtain the mesh data associated with the LOD extension from the first data container. The device may determine that the mesh data associated with the LOD extension is in the first data format based on the determination that the mesh gITF property is associated with the LOD extension. The device may parse a gITF 2.0 file associated with the avatar representation to determine that the avatar representation is associated with the one or more extensions.

In example, the second data container may be configured for containing data of a greater level of complexity than the first data container. For example, the second data container may be configured to contain triangle-based mesh data and quad-based mesh data, and the first data container may be configured to contain the triangle-based mesh data (e.g., without the quad-based mesh data). In some examples, the second data container may include at least one data that is the same as data in the first data container.

An example device (e.g., an encoder) may determine a subset of extensions associated with an avatar representation, wherein the subset of extensions comprises an LOD extension. The device may obtain a first version of mesh data associated with the LOD extension. The device may obtain a second version of the mesh data. The device may store the first version of the mesh data in a first data container and the second version of the mesh data in a second data container. The first data container may be associated with a first data format, and the second data container may be associated with a second data format. The device may include the first data container and the second data container in a file associated with the LOD extension. The device may send the file associated with the LOD extension. In examples, the first data container may be associated with a root node of the avatar representation, and the second data container may be associated with an extension node of the avatar representation. For example, the second data container may be configured for containing data of a greater level of complexity than the first data container. The first data format may be a gITF format, and the second data format may be a non gITF format. In examples, the first version of the mesh data may be in the first data format, and the second version of the mesh data may be in the second data format. In some examples, a property type indication may be used to indicate whether the mesh data associated with the LOD extension is in the first data format or the second data format. For example, if the value of the property type indication indicates the mesh data associated with the LOD extension is in the first data format, the first data container may be used to contain the mesh data associated with the LOD extension. If a value of the property type indication indicates the mesh data associated with the LOD extension is in the second data format, the second data container may be used to contain the mesh data associated with the LOD extension.

An example device (e.g., an encoder) may determine a subset of extensions associated with an avatar representation. For example, the subset of extensions may include a level of details (LOD) extension. The device may determine whether to use a first data container or a second data container to contain mesh data associated with the LOD extension. For example, the first data container is associated with a first data format, and the second data container is associated with a second data format. The device may include the mesh data associated with the LOD extension in the first or second data container. The device may indicate the first or second data container for containing the mesh data associated with the LOD extension. In examples, a mesh gITF property may be associated with the LOD extension and used to indicate that the first data container contains the mesh data associated with the LOD extension. In examples, the first data container may be associated with a root node of the avatar representation, and the second data container may be associated with an extension node of the avatar representation. For example, the second data container may be configured for containing data of a greater level of complexity than the first data container. In some examples, a property type indication may be used to indicate whether the mesh data associated with the LOD extension is in the first data format or the second data format. For example, if the value of the property type indication indicates the mesh data associated with the LOD extension is in the first data format, the first data container mav be used to contain the mesh data associated with the LOD extension. If a value of the property type indication indicates the mesh data associated with the LOD extension is in the second data format, the second data container may be used to contain the mesh data associated with the LOD extension.

An avatar representation may be encoded. A subset of a graphics language transmission format (gITF) format may be used to encode an avatar representation. Extensions may create a format for the encoding of an avatar and/or associated features. The encoding may provide retro compatibility. For example, previous gITF decoders may parse the file with a minimum of features. Compatible decoders may parse more content and provide more features.

3D content may be encoded in multiple formats, which may include mesh rigs, e.g. deformable 3D objects using weights. Formats may include, for example, filmbox (FBX), universal scene description (USD), and/or gITF. Formats may not be dedicated to avatar data. For example, an application may interpret data that might relate to an avatar (e.g., in an encoding format) and determine how to parse and utilize the data that may relate to an avatar.

One or more formats may (e.g., specifically) encode avatar content, e.g., DNA, virtual reality model (VRM) or Avatar JavaScript Object Notation (Json) Interchange File Format (AJIF). DNA may allow the encoding of the head of an avatar, which may include one or more (e.g., many) features, such as blendshapes. The DNA format is a closed format that may provide an implementation for reading and writing DNA files. The VRM format is an open-source file format that may be used for humanoid character avatars. VRM may be an extension of gITF version 2.0. Decoders that support VRM may (e.g., be required to) read the content. The AJIF format is an open format that may be used to encode avatar content with interchangeability in mind. For example, AJIF may use a JSON-based encoding to store the data, which may be decoded by a dedicated decoder.

MPEG may include an MPEG_node_avatar extension for gITF, which may define a node being an avatar. The extension may allow an application to determine (e.g., know) which nodes in the file represent avatars (e.g., with an "isAvatar" property), what kind of avatar the avatar is (e.g., with a "type" property), and/or the parts of the avatar (e.g., with a "mappings" property). Textured avatar rigs may be efficiency encoded in an open fashion (e.g., using features in gITF 2.0), which may be decoded using gITF decoders. Avatars encoded in gITF 2.0 may lack one or more (e.g., many) features that may be found in avatar formats like DNA, VRM, and/or AJIF.

A set of gITF extensions is described herein. An (e.g., each) extension (e.g., in the set of gITF extensions) may provide one or more avatar features. For example, an MPEG_avatar_metadata root extension is described for avatar metadata (e.g., age, id, etc.). One or more (e.g., some) extensions may replace one or more gITF containers. For example, an MPEG_geometries root extension may replace the "meshes" gITF root property. While both may define meshes, MPEG_geometries may provide extended features, e.g., the support of polygons and/or multi-uvs coordinates.

The gITF extensions described herein may allow the encoding of features that may be associated with Avatar Json Interchange File Format (AJIF). The resulting files may be gITF-based AJIF files.

Encoded features may be decoded by applications that do not know the extended features.

FIG. 5 illustrates an example of retro compatibility according to an embodiment. FIG. 5 illustrates an example of a capability of the (e.g., extended) format (e.g., as described herein) to be read by compatible or non-compatible AJIF decoders. For example, a gITF-based AJIF file may be created to store an avatar mesh. The gITF-based AJIF file may include a first avatar mesh, e.g., in the "meshes" root property. A gITF mesh may be based on triangles. The gITF-based AJIF file may include a second avatar mesh, e.g., in the "MPEG_geometries" root extension. The second mesh may have the same vertices (e.g., same number and coordinates) as the first mesh, but the topology of the second mesh may be based on quads rather than triangles. There may be little impact to memory overhead. For example, e.g., as described herein, buffers may be shared between (e.g., basic) gITF and extensions, such as an extension that encodes the vertex coordinates. The gITF-based AJIF file may include multiple versions of the same mesh, e.g., one version with triangles (e.g., basic gITF), and a second version with quads (e.g., extensions). A non-compatible AJIF decoder that reads the gITF-based AJIF file may ignore the AJIF related extension (e.g., none of them may be in the "extensionsRequired" root property). A non-compatible AJIF decoder that reads the gITF-based AJIF file may parse the basic gITF content (e.g., the application may have access to the triangle-based avatar mesh). A compatible AJIF decoder that reads the gITF-based AJIF file may choose between the triangle-based mesh and quad-based mesh, which may enable (e.g., all possible) features.

Table 1 shows examples of gITF extensions for AJIF properties and gITF equivalents (e.g., if any).

Table 1 - Examples of gITF extensions for AJIF properties and gITF equivalents

| AJIF property | gITF extension | gITF equivalent |
|---|---|---|
| data | MPEG_avatar_rawdata | accessors |

(continued)

| AJIF property | gITF extension | gITF equivalent |
|---|---|---|
| geometries | M PEG_avatar_geometries | mesh primitives |
| nodes | MPEG_avatar_nodes | nodes |
| skeletons | MPEG_avatar_skeletons | skins |
| controllers | MPEG_avatar_controllers | animations |
| lods | MPEG_avatar_lods | |
| metadata | MPEG_avatar_metadata | |

There may be a direct gITF equivalent for "data," "nodes," "skeletons," and/or "controllers." The direct gITF equivalent may have different features.

Table 2 shows an example of a property of the MPEG_avatar_rawdata extension.

Table 2 - Example of a property of the MPEG_avatar_rawdata extension

| Name | Type | Description | Determine Whether Required |
|---|---|---|---|
| data | RawData [1-*] | List of *RawData.* | Yes |

An example of RawData is described herein.

Table 3 shows an example of a property of an MPEG_avatar_geometries extension.

Table 3 - example of a property of an MPEG_avatar_geometries extension

| Name | Type | Description | Determine Whether Required |
|---|---|---|---|
| geometries | Geometry [1-*] | List of *Geometry.* | Yes |

An example of Geometry is described herein.

Table 4 shows an example of a property of an MPEG_avatar_node extension.

Table 4 - example of a property of an MPEG_avatar_node extension

| Name | Type | Description | Determine Whether Required |
|---|---|---|---|
| nodes | Node [1-*] | List of *Node.* | Yes |

An example of Node is described herein.

Table 5 shows an example of a property of an MPEG_avatar_skeletons extension.

Table 5 - example of a property of an MPEG_avatar_skeletons extension

| Name | Type | Description | Determine Whether Required |
|---|---|---|---|
| skeletons | Skeleton [1-*] | List of *Skeleton.* | Yes |

An example of Skeleton is described herein.

Table 6 shows an example of a property of an MPEG_avatar_controllers extension.

Table 6 - example of a property of an MPEG_avatar_controllers extension

| Name | Type | Description | Determine Whether Required |
|---|---|---|---|
| controllers | Controller [1-*] | List of *Controller.* | Yes |

An example of Controller is described herein.

Table 7 shows an example of a property of an MPEG_avatar_lods extension.

Table 7 - example of a property of an MPEG_avatar_lods extension

| Name | Type | Description | Determine Whether Required |
|------|------|-------------|---------------------------|
| lods | LOD [1-*] | List of *LOD.* | Yes |

An example of an LOD is described herein.

Table 8 shows examples of properties of an MPEG_avatar_metadata extension.

Table 8 - examples of properties of an MPEG_avatar_metadata extension

| Name | Type | Description | Determine Whether Required |
|------|------|-------------|---------------------------|
| name | string | Avatar name. | No |
| id | string | Avatar identifier. | No |
| age | int | Avatar age. | No |
| gender | string | Avatar gender. | No |
| formatType | enum | Indicates the type of the avatar format. Table 12 contains the supported types. | Yes |
| lod | integer | Reference to an item of the "lods" item list in the "MPEG_avatars_lods" extension. | Yes |

The "name" property may define the name of the avatar. The "name" property may not be the name of a user. The "name" property may be a name used to describe the avatar.

The "id" property may define a unique value that identifies the avatar. The "id" property may not be the id of a user. The "id" property may be a value to distinguish the avatar from other avatars in the scope of a context, such as an application or a virtual world.

The "age" property may define the age of the avatar.

The "gender" property may define the gender (or genders) of the avatar. The values of the property may not be limited to "male" and "female." The values of the property may extend to any value relevant for applications.

The "formatType" property may be used to define the format of the avatar encoding. The encoder/decoder may know (e.g., as a priori) what to expect, for example, before having to parse the whole file in terms of what formats are being used. Table 12 includes an example of two formats (e.g., gITF and AJIF). If the "formatType" is equal to 0 the encoder/decoder may expect that the whole file is encoded with gITF proprieties and functionalities (e,g., only with gITF proprieties and functionalities). If the "formatType" is equal to 1 the encoder/decoder may expect the format to be of type AJIF, and as consequence the files may be parsed entirely (e.g., must be parsed entirely). If the format of the file is AJIF it can also be expected to be hybrid e.g., there are AJIF and gITF properties in the same file to be encoded/decoded. In some examples, if the file is any other format other than AJIF it may not be considered hybrid.

The "lod" property may reference on lod in the list of "lods" from the MPEG_avatar_lods extension. It may associate a given avatar metadata information to a lod to facilitate identification and personalization of the avatar format.

In some examples, the properties may be defined in the "MPEG_node_avatar" extension, and/or in an attribute (e.g., a "metadata" attribute) of the "MPEG_node_avatar" extension.

RawData may be defined. A RawData item may include low-level content, e.g., tensors or images. Table 9 shows an example definition of a RawData item.

Table 9 - example definition of a RawData item

| Name | Type | Description | Determine Whether Required |
|------|------|-------------|---------------------------|
| name | string | RawData name. | No |
| type | string | Data type: "dense," "sparse," "image" or "tuples" | ü Yes |
| uri | string | Data content or reference to the data content (depends on type). | ü Yes |
| offset | integer | Offset in data content. | No, default 0 |
| byte Length | integer | Number of byte to use in data content. | No, default is content size |
| If type is "dense" { | | | |

(continued)

| Name | Type | Description | Determine Whether Required |
|---|---|---|---|
| dims | integer [1-*] | Dimension of tensor | ü Yes |
| dtype | string | Type of values, like "f32," "f64," "i8," ... | ü Yes |
| } | | | |
| If type is "sparse" { | | | |
| dims | integer [1-*] | Dimension of tensor | ü Yes |
| count | integer | Number of a 2-tuple (index, value) in | ü Yes |
| | | data content | |
| dtype | string | Type of values, like "f32," "f64," "i8," ... | ü Yes |
| itype | string | Type of indices, like "i32," "i64," ... | ü Yes |
| } | | | |
| If type is "image" { | | | |
| mimeType | string | Image mime type, like "image/png" | No |
| dims | integer [2] | Image size | No |
| ctype | string | Type of colors, like "RGB," "YUV," ... | No |
| dtype | string | Type of color values, like "f32," "f64," "i8,"... | No |
| } | | | |
| If type is "tuples" { | | | |
| count | integer | Number of tuples | No |
| dtype | string | Type of tuple values, like "f32," "f64," "i8," ... | ü Yes |
| itype | string | Type of tuple sizes, like "i32," "i64," ... | ü Yes |
| } | | | |

A RawData definition may include a uniform resource identifier (uri) definition. A "uri" property may include and/or may reference a binary content. The usage and/or interpretation of the content may depend on one or more other properties.

For example, if a "uri" property starts with "data:application/ajif-buffer;base64," the following characters may be a base64 encoding of the data. For example, the following uri:

data:application/ajif-buffer;base64,TWFueSBoYW5kcyBtYWtlIGxpZ2h0IHdvcmsu
may include the following base64 encoded data:
TWFueSBoYW5kcyBtYWtlIGxpZ2h0IHdvcmsu

The decoding of the encoded data may be (e.g., interpreted as a UTF-8 string), for example:

Many hands make light work.

For example, if a "uri" starts with "http:" or "https:," the "uri" may be interpreted as a uniform resource locator (URL). The data may be downloaded from the URL.

For example, if the "uri" property does not start with "data:," "http:" or "https:," the "uri" may include a file path relative to the path of the AJIF. The file may include the data.

Decoding may be defined or undefined for other "uri" values.

A uri property may be the same as the "uri" property in glTF buffers, e.g., with respect to one or more characteristics. The definition of "uri" may be extended.

A RawData definition may include offset and/or byteLength definitions.

For example, if the "offset" and the "byteLength" properties are not present, then (e.g., all) the binary content provided by the "uri" property may be used.

For example, if the "byteLength" property is present but not the "offset" property, then (e.g., only) the first "byteLength" bytes of the binary content provided by the "uri" property may be used. For example, if "uri" provides three (3) bytes (23,17,240), where "byteLength" may be two (2) and there is no "offset," then the content to consider may be (23, 17).

For example, if the "offset" property is present but not the "byteLength" property, then the "offset" first bytes may be ignored in the binary content provided by the "uri" property. For example, if "uri" provides three (3) bytes (23,17,240), where "offset" is one (1) and there is no "byteLength," then the content to consider may be (17, 240).

For example, if the "offset" and "byteLength" properties are present, then (e.g., only) the "byteLength" bytes from "offset" may be considered in the binary content provided by the "uri" property. For example, if "uri" provides three (3) bytes (23,17,240), where "offset" is one (1) and "byteLength" is one (1), then the content to consider may be (17).

A RawData item may include dense tensor encoding.

For example, if a RawData "type" is "dense," the item may include a tensor (e.g., or multidimensional array). In this case, the tensor may be represented using (e.g., all) the values of the tensor.

A "dims" property may define the tensor dimensions, e.g., from left to right. The total number of values in the tensor may be the product of the dimensions. For example, if "dims" is [2,7,4], then the first dimension may be 2, the second dimension may be 7 and the third dimension may be 4. The total number of values in the example may be calculated, for example, as follows: 2 * 7 * 4 = 56.

A "dtype" property may define the type of values in the tensor. For example, if "dtype" is "i8," values in the tensor may be 8-bit signed integers. For example, if "dtype" is "u8," values in the tensor may be 8-bit unsigned integers. For example, if "dtype" is "i16," values in the tensor may be 16-bit signed little-endian integers. For example, if "dtype" is "u16," values in the tensor may be 16-bit unsigned little-endian integers. For example, if "dtype" is "i32," values in the tensor may be 32-bit signed little-endian integers. For example, if "dtype" is "u32," values in the tensor may be 32-bit unsigned little-endian integers. For example, if "dtype" is "i64," values in the tensor may be 64-bit signed little-endian integers. For example, if "dtype" is "u64," values in the tensor may be 64-bit unsigned little-endian integers. For example, if "dtype" is "f16," values may be IEEE 754 16-bit floating-point numbers. For example, if "dtype" is "f32," values may be IEEE 754 32-bit floating-point numbers. For example, if "dtype" is "f64," values may be IEEE 754 64-bit floating-point numbers.

The values of the tensor may be decoded from the binary content obtained from "uri," "offset," and "byteLength." The ordering of values in the binary content may be a row-major order. For example, if the binary content includes bytes [3,17,23,1] and "dtype" is "u16," then the decoded values may be determined as follows: [3+17*256, 23+1*256]= [4355,279].

A RawData item may include sparse tensor encoding.

For example, if "type" is "sparse," the item may include a tensor (e.g., or multidimensional array). The tensor may be represented with a list of 2-tuples (index, value), where the index may be the location of the value in the tensor. An index may be the 1D indexing of cells in a tensor. For tensors with more than one dimension, the 1D indexing may be obtained by a "flattening" of the tensor, e.g., by knowing that the ordering of values is a row-major order. For example, if the dimensions of the tensor is [a,b,c], then the 1D-index of the 3D-index (x,y,z) may be determined, for example, as follows: $(x * b + y) * c + z$.

The "count" property may define the number of 2-tuples (index, value). The property may be optional. The property may be used to know the size of the list without having to decode the binary content.

The "dims" property may define the tensor dimensions, e.g., from left to right. The total number of values in the tensor may be the product of these dimensions. For example, if "dims" is [2,7,4], then the first dimension may be 2, the second dimension may be 7 and the third dimension may be 4. The total number of values in the example may be determined, for example, as follows: 2 * 7 * 4 = 56.

The "dtype" property may define the type of values in the tensor. For example, if "dtype" is "i8," values in the tensor may be 8-bit signed integers. For example, if "dtype" is "u8," values in the tensor may be 8-bit unsigned integers. For example, if "dtype" is "i16," values in the tensor may be 16-bit signed little-endian integers. For example, if "dtype" is "u16," values in the tensor may be 16-bit unsigned little-endian integers. For example, if "dtype" is "i32," values in the tensor may be 32-bit signed little-endian integers. For example, if "dtype" is "u32," values in the tensor may be 32-bit unsigned little-endian integers. For example, if "dtype" is "i64," values in the tensor may be 64-bit signed little-endian integers. For example, if "dtype" is "u64," values in the tensor may be 64-bit unsigned little-endian integers. For example, if "dtype" is "f16," values may be IEEE 754 16-bit floating-point numbers. For example, if "dtype" is "f32," values may be IEEE 754 32-bit floating-point numbers. For example, if "dtype" is "f64," values may be IEEE 754 64-bit floating-point numbers.

The "itype" property may define the type of indices in the 2-tuple list. For example, if "itype" is "i8," values in the tensor may be 8-bit signed integers. For example, if "itype" is "u8," values in the tensor may be 8-bit unsigned integers. For example, if "itype" is "i16," values in the tensor may be 16-bit signed little-endian integers. For example, if "itype" is "u16," values in the tensor may be 16-bit unsigned little-endian integers. For example, if "itype" is "i32," values in the tensor may be 32-bit signed little-endian integers. For example, if "itype" is "u32," values in the tensor may be 32-bit unsigned little-endian integers. For example, if "itype" is "i64," values in the tensor may be 64-bit signed little-endian integers. For example, if "itype" is "u64," values in the tensor may be 64-bit unsigned little-endian integers.

The 2-tuples (index, value) of the sparse tensor may be decoded from the binary content obtained from "uri," "offset," and "byteLength." The "count" tuples may be decoded one after another, e.g., (index1,value1,index2,value2,...).

For example, if the binary content includes bytes [29,3,17,7,23,1], where "dtype" is "u16" and "itype" is "i8," then the decoded tuples may be [(29,4355), (7,279)].

A RawData item may include image encoding.

For example, if "type" is "image," the item may include an image, e.g. a 2D array of pixel values in a (specific) color space.

For example, if "mimeType" is not present, the "dims," "ctype," and "dtype" properties may be present.

The "dims" property may define the size of the image [width, height].

The "ctype" may define the format of pixels. For example, if "ctype" is "RGB," pixels may be red, green, and blue pixels. For example, if "ctype" is "RGBA," pixels may be red, green, blue, and alpha pixels.

The "dtype" property may define the type of pixel values. For example, if "dtype" is "i8," values in the tensor mav be 8-bit signed integers. For example. if "dtype" is "u8," values in the tensor mav be 8-bit unsigned integers. For example, if "dtype" is "i16," values in the tensor may be 16-bit signed little-endian integers. For example, if "dtype" is "u16," values in the tensor may be 16-bit unsigned little-endian integers. For example, if "dtype" is "i32," values in the tensor may be 32-bit signed little-endian integers. For example, if "dtype" is "u32," values in the tensor may be 32-bit unsigned little-endian integers. For example, if "dtype" is "i64," values in the tensor may be 64-bit signed little-endian integers. For example, if "dtype" is "u64," values in the tensor may be 64-bit unsigned little-endian integers. For example, if "dtype" is "f16," values may be IEEE 754 16-bit floating-point numbers. For example, if "dtype" is "f32," values may be IEEE 754 32-bit floating-point numbers. For example, if "dtype" is "f64," values may be IEEE 754 64-bit floating-point numbers.

For example, if "ctype" is "RGB" and "dtype" is "f32," a (e.g., each) pixel may have three 32-bit floating values.

The binary content obtained from "uri," "offset," and "byteLength" may include the pixel values of the image. The ordering of values in the binary content may be, for example, a row-major order. For example, if the binary content includes bytes [3,17,23,1,3,7,9,8,2,7,5,3], where "dims" is (2,2), "ctype" is "RGB," and "dtype" is "u8," then the decoded values may be, for example, as follows:

pixel(0,0): red=3, green=17, blue=23
pixel(0,1): red=1, green=3, blue=7
pixel(1,0): red=9, green=8, blue=2
pixel(1,1): red=7, green=5, blue=3

For example, if "mimeType" is present, the binary content obtained from "uri," "offset," and "byteLength" may include an image encoded with the corresponding mime Type. For example, if "mimeType" is "image/png," then the binary content may be an image encoded using the PNG file format.

The "dims" property may not be used for formats that encode the dimension of the image. The "dims" property may be present with the dimension of the image.

The "ctype" property may not be used for formats that encode the pixel format of the image. The "ctype" property may be present with the pixel format.

The "dtype" property may not be used for formats that encode the type of pixel values. The "dtype" property may be present with the type of pixel values.

A RawData item may include tuples encoding.

For example, if "type" is "tuples," the item may include a list of tuples. A (e.g., each) tuple may have the same type of value, a different number of values, and/or zero (0) or more values.

For example, a "count" property (e.g., if present) may include the number of tuples in the list.

The "dtype" property may define the type of values in the tuples. For example, if "dtype" is "i8," values in the tensor may be 8-bit signed integers. For example, if "dtype" is "u8," values in the tensor may be 8-bit unsigned integers. For example, if "dtype" is "i16," values in the tensor may be 16-bit signed little-endian integers. For example, if "dtype" is "u16," values in the tensor may be 16-bit unsigned little-endian integers. For example, if "dtype" is "i32," values in the tensor may be 32-bit signed little-endian integers. For example, if "dtype" is "u32," values in the tensor may be 32-bit unsigned little-endian integers. For example, if "dtype" is "i64," values in the tensor may be 64-bit signed little-endian integers. For example, if "dtype" is "u64," values in the tensor may be 64-bit unsigned little-endian integers. For example, if "dtype" is "f16," values may be IEEE 754 16-bit floating-point numbers. For example, if "dtype" is "f32," values may be IEEE 754 32-bit floating-point numbers. For example, if "dtype" is "f64," values may be IEEE 754 64-bit floating-point numbers.

The "itype" property may define the type of indices in the tuples: For example, if "itype" is "i8," values in the tensor may be 8-bit signed integers. For example, if "itype" is "u8," values in the tensor may be 8-bit unsigned integers. For example, if "itype" is "i16," values in the tensor may be 16-bit signed little-endian integers. For example, if "itype" is "u16," values in the tensor may be 16-bit unsigned little-endian integers. For example, if "itype" is "i32," values in the tensor may be 32-bit signed little-endian integers. For example, if "itype" is "u32," values in the tensor may be 32-bit unsigned little-endian integers. For example, if "itype" is "i64," values in the tensor may be 64-bit signed little-endian integers. For example, if "itype" is "u64," values in the tensor may be 64-bit unsigned little-endian integers.

The binary content obtained from "uri," "offset," and "byteLength" may include the tuples. A (e.g., each) tuple may be encoded, for example, as (tuple size, tuple value1, tuple value2, etc.). For example, if the binary content includes bytes [1,3,17,2,23,1,18,29], where "dtype" is "u16" and "itype" is "u8," then there may be two tuples: (4355) and (279,7442). Binary glTF may be little endian, e.g., as described herein.

A glTF extension may include geometry, which may be defined. In some examples, a *Geometry* may define a mesh with associated properties shown in Table 10. Table 10 shows an example *Geometry* definition (e.g,, of a mesh with associated properties).

Table 10 - Example Geometry definition (e.g., of a mesh with associated properties)

| Name | Type | Description | Determine Whether Required |
|---|---|---|---|
| name | string | Geometry name. | No |
| vertices | integer | References an item in the "MPEG_avatar_rawdata" extension. The referenced item may be a float tensor [number of vertices, 3]. | No |
| verticesGltf | integer | References an item in the *"accessors"* root property. The referenced item may be a float VEC3. | No |
| colors | integer | References an item in the "MPEG_avatar_rawdata" extension. The referenced item may be a float tensor [number of vertices, 3] or [number of vertices, 4]. | No |
| colorsGltf | integer | References an item in the «accessors» root property. The referenced item may be a float VEC3 or VEC4. | No |
| normals | integer | References an item in the "MPEG_avatar_rawdata" extension. The referenced item may be a float tensor [number of vertices, 3]. | No |
| normalsGltf | integer | References an item in the «accessors» root property. The referenced item may be a float VEC3. | No |
| uvs | integer [1-*] | List of references to an item the "MPEG_avatar_rawdata" extension. The ith referenced item may be a float tensor [number of uvs(i), 2]. | No |
| uvsGltf | integer [1-*] | List of references to an item in the «accessors» root property. The referenced items may be a float VEC2. | No |
| faces | Faces | A *Faces* object. | No |
| blendshapes | Blendshape [1-*] | List of *Blendshape.* | No |
| textures | Texture [1-*] | List of *Texture.* | No |

The "vertices" and "verticesGltf' properties may reference a tensor V with the vertices of the mesh, where V(i) = (x,y,z) may be the X, Y, Z coordinates of the vertex of index i. One or the other of the "vertices" and "verticesGltf' properties may be present. The "vertices" property may reference data in the "MPEG_avatar_rawdata" extension, while the "verticesGltf' property may reference data in the "accessors" root property.

The "colors" and "colorsGltf' properties may reference a tensor C with the colors of the mesh, where C(i) = (r,g,b) or C(i) = (r,g,b,a) are the red, green, blue and alpha values of the vertex of index i. One or the other of the "colors" and "colorsGltf' properties may be present. The "colors" property may reference data in the "MPEG_avatar_rawdata" extension, while the "colorsGltY' property may reference data in the "accessors" root property.

The "normals" and "normalsGltf' properties may reference a tensor N with the vertex normals of the mesh, where N(i) = (x,y,z) may be the X, Y, Z coordinates of the normal of index i. One or the other of the "normals" and "normalsGltf' properties may be present. The "normals" property may reference data in the "MPEG_avatar_rawdata" extension, while the "normalsGltf' property may reference data in the "accessors" root property.

The "uvs" and "uvsGltf' properties may reference a list of tensors U(j) with the vertices of the mesh, where U(j)(i) = (u,v) may be the U, V coordinates of the uv of index i of the uvs set of index j. One or the other of the "uvs" and "uvsGltf' properties may be present. The "uvs" property may reference data in the "MPEG_avatar_rawdata" extension, while the "uvsGltf' property may reference data in the "accessors" root property.

The "faces" property may include indices for a (e.g., each) face of the mesh. For example, see an example Faces definition described herein.

The "blendshapes" property may include a list of blendshapes (e.g., or morph targets). For example, see an example *Blendshapes* definition described herein.

The "textures" property may include a list of textures. For example, see an example *Textures* definition described herein.

In some examples, a *Geometry* may define a mesh with one or more associated properties shown in Table 11. Table 11 shows an example Geometry definition (e.g., of a mesh with associated properties).

Table 11 - Example Geometry definition (e.g., of a mesh with associated properties)

| Name | Type | Description | Determine Whether Required |
|---|---|---|---|
| name | string | Geometry name. | No |
| verticesType | enum | Indicate the type of vertices being signaled, e.g., 0 may be to gITf, 1 may be to AJIF and the following may be reserved. Table 12 may include the supported types. | No |
| verticesSource | integer | References a vertices object for the given type in "vertices Type." | No |
| colorsType | enum | Indicate the type of colors being signaled, e.g., 0 may be to gITf, 1 may be AJIF and the following may be reserved. Table 12 may include the supported types. | No |
| colorsSource | integer | References a colors object for the given type in "colorsType." | No |
| normalsType | enum | Indicate the type of normals being signaled, e.g., 0 may be to gITf, 1 may be to AJIF and the following may be reserved. Table 12 may include the supported types. | No |
| normalsSource | integer | References a normals object for the given type in "normalsType." | No |
| uvsType | Enum [1-*] | Indicate the type of uvs being signaled, e.g., 0 may be to gITf, 1 may be to AJIF and the following may be reserved. Table 12 may include the supported types. | No |
| uvsSource | Integer [1-*] | References a uvs object for the given type in "uvsType." | No |
| faces | Faces | A *Faces* object. | No |
| blendshapes | Blendshape [1-*] | List of *Blendshape.* | No |
| textures | Texture [1-*] | List of *Texture.* | No |

For example, if "verticesType" is equal to zero (0), the definition of "verticesSource" may be the same as the "verticesGltf' (e.g., as described herein).

For example, if "verticesType" is equal to one (1), the definition of "verticesSource" may be the same as the "vertices" (e.g., as described herein).

For example, if "colorsType" is equal to zero (0), the definition of "colorsSource" may be the same as the "colorsGltf' (e.g., as described herein).

For example, if "colorsType" is equal to one (1), the definition of "colorsSource" may be the same as the "colors" (e.g., as described herein).

For example, if "normalsType" is equal to zero (0), the definition of "normalsSource" may be the same as the "normalsGltf' (e.g., as described herein).

For example, if "normalsType" is equal to one (1), the definition of "normalsSource" may be the same as the "normals" (e.g., as described herein).

For example, if "uvsType" is equal to zero (0), the definition of "uvsSource" may be the same as the "uvsGltf' (e.g., as described herein).

For example, if "uvsType" is equal to one (1), the definition of "uvsSource" may be the same as the "uvs" (e.g., as described herein).

The remaining properties definition may remain the same (e.g., as described herein).

Table 12 shows an example of the types of formats that may be supported by an encoder and decoder.

Table 12 - example of the types of formats that may be supported by an encoder and decoder

| Type | Value |
| --- | --- |
| gITF | 0 |
| AJIF | 1 |
| Reserved | 2-15 |

A gITF extension may include faces, which may be defined.

In some examples, a Faces object may define indices for a (e.g., each) face of a mesh, as shown by example in Table 13.

Table 13 - Example definition of indices for a (e.g., each) face of a mesh by a Faces object

| Name | Type | Description | Determine Whether Required |
| --- | --- | --- | --- |
| vertices | integer | References an item in the "MPEG_avatar_rawdata" extension. The referenced item may be a float tensor [number of faces, 3-256] or a list of tuples, where tuples may have between 3 and 256 values. | No |
| verticesGltf | integer | References an item in the «accessors» root property. The referenced item may be an integer SCALAR or use the "MPEG_accessor_tuples" extension. | No |
| normals | integer | References an item in "MPEG_avatar_rawdata" extension. The referenced item may be a float tensor [number of faces, 3-256] or a list of tuples, where tuples may have between 3 and 256 values. | No |
| normalsGltf | integer | References an item in the «accessors» root property. The referenced item may be an integer SCALAR or use the "MPEG_accessor_tuples" extension. | No |
| uvs | integer [1-*] | List of references of items in the "MPEG_avatar_rawdata" extension. A (e.g., each) referenced item may be a float tensor [number of faces, 3-256] or a list of tuples, where tuples may have between 3 and 256 values. | No |
| uvsGltf | integer [1-*] | List of references to an item in the «accessors» root property. A referenced item may be an integer SCALAR or use the "MPEG_accessor_tuples" extension. | No |

A (e.g., each) property of Faces may reference an item (e.g., or a list of items) in a data collection that represents indices for a (e.g., each) face of the mesh. The "vertices," "normal," and "uvs" may reference data in the "MPEG_avatar_rawdata" extension, while the "verticesGltf," "normalsGltf," and "uvsGltf' may reference data in the "accessors" root property. The items (e.g., each of these items) may have the same layout, e.g. they may be consistent with the same topology. For example, if multiple (e.g., all) faces have the same number of edges, then a (e.g., each) item may be a tensor with dimensions [number of faces, number of edges] or a list of tuples with the same number of tuples. The tuples (e.g., all tuples) may have three values. For example, if faces can have a different number of edges, then a (e.g., each) item may be a list of tuples with the same number of tuples. A (e.g., each) tuple may have the same number of values. An item (e.g., each item) may have the same layout, but may not necessarily have the same values.

The "vertices" or "verticesGltf' property (e.g., if present) may reference an item with the vertex indices of a (e.g., each) face. One or the other of the "vertices" or "verticesGltf' properties may be present. If the "vertices" or "verticesGltf' is not present, then the default vertices of a (e.g., each) face may be in ascending order, for example, (0,1,2),(3,4,5,6),(7,8,9,), etc.

The "normals" or "normalsGltf' property (e.g., if present) may reference an item with the normal indices of a (e.g.,

24

each) face. One or the other of the "normals" or "normalsGltf' properties may be present. If the "normals" or "normalsGltf' is not present, then the normal indices may be equal to the vertex indices.

The "uvs" or "uvsGltf' property (e.g., if present) may include a list of references to items with UV indices of a (e.g., each) face. One or the other of the "uvs" or "uvsGltf' properties may be present. If the "uvs" or "uvsGltf' is not present, then UV indices may be equal to the vertex indices.

In some examples, a Faces object may define indices for a (e.g., each) face of the mesh, as shown by example in Table 14.

Table 14 - Example definition of indices for a (e.g., each) face of a mesh by a Faces object

| Name | Type | Description | Determine Whether Required |
|---|---|---|---|
| vertices Type | enum | Indicate the type of vertices being signaled, e.g., 0 may be to gITf, 1 may be to AJIF and the following may be reserved. Table 12 may include the supported types. | No |
| verticesSource | integer | References a vertices object for the given type in "vertices Type." | No |
| normalsType | enum | Indicate the type of normals being signaled, e.g., 0 may be to gITf, 1 may be to AJIF and the following may be reserved. Table 12 may include the supported types. | No |
| normalsSource | integer | References a normals object for the given type in "normalsType." | No |
| uvsType | Enum [1-*] | Indicate the type of uvs being signaled, e.g., 0 may be to gITf, 1 may be to AJIF and the following may be reserved. Table 12 may include the supported types. | No |
| uvsSource | Integer [1-*] | References a uvs object for the given type in "uvsType." | No |

For example, if "verticesType" is equal to zero (0), "verticesSource" definition may be the same as the "verticesGltf' (e.g., as described herein).

For example, if "verticesType" is equal to one (1), "verticesSource" definition is the same as the "vertices" definition (e.g., as described herein).

For example, if "normalsType" is equal to zero (0), "normalsSource" definition may be the same as the "normalsGltf' definition (e.g., as described herein).

For example, if "normalsType" is equal to one (1), "normalsSource" definition may be the same as the "normals" definition (e.g., as described herein).

For example, if "uvsType" is equal to zero (0), "uvsSource" definition may be the same as the "uvsGltf" definition (e.g., as described herein).

For example, if "uvsType" is equal to one (1), "uvsSource" definition may be the same as the "uvs" definition (e.g., as described herein).

The remaining properties definitions may remain the same (e.g., as described herein).

A geometry may include a Blendshape definition.

In some examples, a *Blendshape* object may include data regarding a blendshape (e.g., or mesh deformation or morph target) and related data, as shown by example in Table 15.

Table 15 - Example of a *Blendshape* object definition

| Name | Type | Description | Determine Whether Required |
|---|---|---|---|
| name | string | Blendshape name. | No |
| displacements | integer | References an item in the "MPEG_avatar_rawdata" extension. The referenced item may be a float tensor [number of vertices, 3]. | ü Yes |

(continued)

| Name | Type | Description | Determine Whether Required |
|------|------|-------------|----------------------------|
| displacementsGltf | integer | References an item in the «accessors» root property. The referenced item may be a float VEC3 or use the "MPEG_accessor_tuples" extension. | No |
| mapping | string | Indicates a corresponding coding syntax mapping e.g., ("facs:AU1,""facs:AU2" ...). | No |
| side | string | Hint about the location of the blendshape ("left," "top," ...) | No |

The "displacements" and "displacementsGltf' properties may reference a float tensor D that may include a displacement vector for a (e.g., each) vertex of the geometry, e.g. D(i) = (x,y,z) may be the displacement for vertex i. One or the other of the "displacements" and "displacementsGltf' properties may be present. The "displacements" property may reference data in the "MPEG_avatar_rawdata" extension, while the "displacements Gltf" property may reference data in the "accessors" root property.

The "mapping" property may include a string that indicates a corresponding coding syntax. For example, "facs:AU1" may indicate that the blendshape is based on the FACS [3] blendshapes "AU1."

The "side" property may include a string that may indicate (e.g., give a hint) about the location of the blendshape. For example, "left" may indicate that the blendshape concerns the left side of the geometry.

In some examples, a *Blendshape* object may include data regarding a blendshape (e.g., or mesh deformation or morph target) and related data, as shown by example in Table 16.

Table 16 - Example of a *Blendshape* object definition

| Name | Type | Description | Determine Whether Required |
|------|------|-------------|----------------------------|
| name | string | Blendshape name. | No |
| displacements Type | enum | Indicate the type of displacements being signaled, e.g., 0 may be to glTf, 1 may be to AJIF and the following may be reserved. Table 12 may include the supported types. | No |
| displacementsSource | integer | References a displacements object for the given type in "displacementsType." | No |
| mapping | string | Indicates a corresponding coding syntax mapping e.g., ("facs:AU1,""facs:AU2" ...). | No |
| side | string | Hint about the location of the blendshape ("left," "top," ...) | No |

For example, if "displacementsType" is equal to zero (0), the "displacementsSource" definition may be the same as the "displacementsGtf' definition (e.g., as described herein).

For example, if "displacementsType" is equal to one (1), the "displacementsSource" definition may be the same as the "displacements" definition (e.g., as described herein).

The remaining properties definitions may remain the same (e.g., as described herein).

A geometry may include a Texture definition.

In some examples, a *Texture* object may define a texture and related data, as shown by example in Table 17.

Table 17 - Example of a texture object definition

| Name | Type | Description | Determine Whether Required |
|------|------|-------------|----------------------------|
| name | string | Texture name. | No |
| type | string | Texture type, like "albedo," "specular," etc. | ü Yes |

(continued)

| Name | Type | Description | Determine Whether Required |
|---|---|---|---|
| uvs | integer | References one of the UV coordinates in the geometry (see "uvs" and "faces" properties). | ü Yes |
| image | integer | References an item in the "MPEG_avatar_rawdata" extension. The referenced item may be an image. | ü Yes |
| imageGltf | integer | References an item in the "images" root property. | ü Yes |
| basis | TextureDisplacem ent [1-*] | A list of *TextureDisplaments.* | No |

The "type" property may define the texture type and (e.g., consequently) its usage. The "type" property may be based on PBR texture types, e.g., "albedo" or "specular."

The "uvs" property may reference UV coordinates in the geometry (e.g., in the "uvs" list of the parent *Geometry* object) and/or UV face indices in the geometry (e.g., in the "uvs" list in the "faces" property of the parent *Geometry* object). The reference may be the index in the lists in the geometry properties. For example, if the "uvs" property is one (1), then the reference may be to the second item in the "uvs" list in the geometry and/or in the "uvs" list in the "faces" property of the geometry.

The "image" and "imageGltf" properties may reference an image. One or the other of the properties may be present. The "image" property may reference data in the "MPEG_avatar_rawdata" extension, while the "imageGltf" property may reference data in the "images" root property.

For example, if there is no "basis" property, the texture image may be the image provided by the "image" or "imageGltf" properties. For example, if there is a "basis" property, the texture image may be parametric, which may be computed, for example, in accordance with Eq. (1):

$$texture = clamp(textureBase + \sum_i weight_i \times textureTarget_i) \qquad (1)$$

With reference to Eq. (1), *textureBase* may be the image provided by the "image" property, *textureTarget_i* may be the displacement provided by the item of index i in the "basis" property, *weight_i* may be a floating value (e.g., provided by the application), and/or *clamp*() may be a function configured to ensure a valid color value range.

In some examples, a *Texture* object may define a texture and related data, as shown by example in Table 18.

Table 18 - Example of a texture object definition

| Name | Type | Description | Determine Whether Required |
|---|---|---|---|
| name | string | Texture name. | No |
| type | string | Texture type, like "albedo," "specular," etc. | ü Yes |
| uvs | integer | References one of the UV coordinates in the geometry (see "uvs" and "faces" properties). | ü Yes |
| imageType | enum | Indicate the type of image being signaled, e.g., 0 may be to gITf, 1 may be to AJIF and the following may be reserved. Table 12 may include the supported types. | No |
| imageSource | integer | References an image object for the given type in "imageType." | No |
| basis | TextureDisplacem ent [1-*] | A list of *TextureDisplaments.* | No |

For example, if "imageType" is equal to zero (0), the "imageSource" definition may be the same as the "imageGltf" definition (e.g., as described herein).

For example, if "imageType" is equal to one (1), the "imageSource" definition may be the same as the "image" definition (e.g., as described herein).

The remaining property definitions may remain the same (e.g., as described herein).

A texture object definition may include a TextureDisplacement definition.

In some examples, a *TextureDisplament* object may include data regarding a texture displacement (e.g., or texture target) and related data, as shown by example in Table 19.

Table 19 - Example of a *TextureDisplament* object definition

| Name | Type | Description | Determine Whether Required |
|---|---|---|---|
| name | string | Texture displacement name. | No |
| displacements | integer | References an item in "MPEG_avatar_rawdata" extension. The referenced item may be a float tensor. | No |
| displacementsGltf | integer | References an item in the «accessors» root property. The referenced item may be a float VEC3. | No |
| mapping | string | Describe the texture displacement. | No |

The "displacements" and "displacementsGltf' properties may reference a float tensor. The dimension of the tensor may be consistent with the dimension of the image provided by the "image" property in the parent *Texture.* For example, if the image has size (e.g., width, height) and RGB channels, the displacement tensor may be (width, height, 3). One or the other of the "displacements" and "displacementsGltf' properties may be present. The "displacements" property may reference data in the "MPEG_avatar_rawdata" extension, while the "displacementsGltf' property may reference data in the "accessors" root property.

The "mapping" property may describe the texture displacement.

In some examples, a *TextureDisplament* object may include data regarding a texture displacement (e.g., or texture target) and related data, as shown by example in Table 20.

Table 20 - Example of a *TextureDisplament* object definition

| Name | Type | Description | Determine Whether Required |
|---|---|---|---|
| name | string | Texture displacement name. | No |
| displacements Type | enum | Indicate the type of displacements being signaled, e.g., 0 may be to gITf, 1 may be to AJIF and the following may be reserved. Table 12 may include the supported types. | No |
| displacementsSource mapping | integer | References a displacements object for the given type in "displacementsType." | No |
|  | string | Describe the texture displacement. | No |

For example, if "displacementsType" is equal to zero (0), the "displacementsSource" definition may be the same as the "displacementsGtf' definition (e.g., as described herein).

For example, if "displacementsType" is equal to one (1), the "displacementsSource" definition may be the same as the "displacements" definition (e.g., as described herein).

The remaining properties definition may remain the same (e.g., as described herein).

A gITF extension may include a Node definition.

In some examples, a *Node* object may include data to organize, merge, describe, and/or transform components, as shown by example in Table 21.

Table 21 - Example of a Node object definition

| Name | Type | Description | Determine Whether Required |
|---|---|---|---|
| name | string | Node name. | No |

(continued)

| Name | Type | Description | Determine Whether Required |
|---|---|---|---|
| mapping | string | Indicates the body part | No |
| geometry | integer | References a geometry in the "MPEG_avatar_geometries" extension. | No |
| geometryGltf | integer | References a mesh in the "meshes" root property. | No |
| children | integer [1-*] | List of references to nodes in the "MPEG_avatar_nodes" collection. | No |
| childrenGltf | integer [1-*] | List of references to nodes in the "nodes" root property. | No |
| scale | float [3] | The node's non-uniform scale, given as the scaling factors along the x, y, and z axes. | No, default [1,1,1] |
| rotation | float [4] | The node's unit quaternion rotation in the order (x, y, z, w), where w may be the scalar. | No, default [0,0,0,1] |
| translation | float [3] | The node's translation along the x, y, and z axes. | No, default [0,0,0] |
| matrix | float [16] | A floating-point 4x4 transformation matrix stored in column-major order. | No, default: [1,0,0,0,0,1,0, 0,0,0,1,0,0,0,0 ,1] |

The "mapping" property may indicate a body part, e.g., "full body/upper_body/right arm."

The "geometry" and "geometryGltf" properties may reference a geometry. The "geometry" and/or "geometryGltf" properties may be present. The "geometry" property may reference a geometry in the "MPEG avatar_geometries" extension, while the "geometryGltf" property may reference a mesh in the "meshes" root property.

The "children" and "childrenGltf" properties may be lists of node indices that define the children of the node. Node children may be correct, for example, if they do not create any circular dependencies. The "children" and/or "childrenGltY' properties may be present. The "children" property may reference nodes in the "MPEG_avatar_nodes" extension, while the "geometryGltf" property may reference nodes in the "nodes" root property.

The "scale" property may define a node's non-uniform scale, which may be given as the scaling factors along the x, y, and z axes. The "matrix" property may not be present if the "scale" property is present.

The "rotation" property may define a node's unit quaternion rotation, for example, in the order (x, y, z, w), e.g., where w may be the scalar. The "matrix" property may not be present if the "rotation" property is present.

The "translation" property may define a node's translation along the x, y, and z axes. The "matrix" property may not be present if the "translation" property is present.

The "scale," "rotation," and/or "translation" (e.g., if present) may be applied, for example, in the following order: scale, rotate, and translate.

The "matrix" property may define a floating-point 4x4 transformation matrix stored in column-major order. "scale," "rotation" and "translation" may not be present if this one is present.

In some examples, a *Node* object may include data to organize, merge, describe, and/or transform components, as shown by example in Table 21A.

Table 21A - Example of a Node object definition

| Name | Type | Description | Determine Whether Required |
|---|---|---|---|
| name | string | Node name. | No |
| mapping | string | Indicates the body part | No |
| geometryType | enum | Indicate the type of geometry being signaled, e.g., 0 may be to gITf, 1 may be to AJIF and the following may be reserved. Table 12 may include the supported types. | No |
| geometrySource | integer | References a geometry object for the given type in "geo-metryType." | No |

(continued)

| Name | Type | Description | Determine Whether Required |
|---|---|---|---|
| childrenType | enum [1-*] | Indicate the type of children being signaled, e.g., 0 may be to gITf, 1 may be to AJIF and the following may be reserved. Table 12 may include the supported types. | No |
| childrenSource | integer [1-*] | References a children object for the given type in "childrenType." | No |
| scale | float [3] | The node's non-uniform scale, given as the scaling factors along the x, y, and z axes. | No, default [1,1,1] |
| rotation | float [4] | The node's unit quaternion rotation in the order (x, y, z, w), where w may be the scalar. | No, default [0,0,0,1] |
| translation | float [3] | The node's translation along the x, y, and z axes. | No, default [0,0,0] |
| matrix | float [16] | A floating-point 4x4 transformation matrix stored in column-major order. | No, default: [1,0,0,0,0,1,0, 0,0,0,1,0,0,0,0 ,1] |

For example, if "geometryType" is equal to zero (0), the "geometrySource" definition may be the same as the "geometryGtY' definition (e.g., as described herein).

For example, if "geometryType" is equal to one (1), the "geometrySource" definition may be the same as the "geometry" definition (e.g., as described herein).

For example, if "childrenType" is equal to zero (0), the "childrenSource" definition may be the same as the "childrenGtf" definition (e.g., as described herein).

For example, if "childrenType" is equal to one (1), the "childrenSource" definition may be the same as the "children" definition (e.g., as described herein).

The remaining property definitions may remain the same (e.g., as described herein).

Node, mesh, and geometries are described relative to each other. A mesh in a node may consider the merge of (e.g., all) properties found in a node and its descendants, for example, (e.g., only) if the node or at least one of its descendants references a geometry. The merge of properties may be the concatenation of (e.g., all) properties found during a depth-first traversal of the node hierarchy.

A gITF extension may include a Skeleton definition.

In some examples, a *Skeleton* may define an avatar skeleton, as shown by example in Table 22.

Table 22 - Example of a Skeleton object definition

| Name | Type | Description | Determine Whether Required |
|---|---|---|---|
| name | string | Skin name. | No |
| mapping | string | To identify the skeleton purpose. | No |
| root | integer | References a node in the "MPEG_avatar_nodes" extension. Defines the skeleton root. | No |
| rootGltf | integer | References a node in the "nodes" root property. Defines the skeleton root. | No |
| joints | integer [1-*] | List of references to nodes in the "MPEG_avatar_nodes" extension. | No |
| jointsGltf | integer [1-*] | List of references to nodes in the "nodes" root property. | No |
| inverseBindMa trices | integer | References an item in "MPEG_avatar_rawdata" extension. The referenced item may be a float tensor [joint count, 4, 4] | No |

(continued)

| Name | Type | Description | Determine Whether Required |
|------|------|-------------|---------------------------|
| inverseBindMa tri-cesGltf | integer | References an item in "accessors" root property. The referenced item may be a float MAT4. | No |
| skinnings | integer [1-*] | List of *Skinning.* | No |

The "mapping" property may define the skeleton purpose.

The "root" and "rootGltY' properties may reference a node that defines the skeleton root node. The node may be the closest common root of the joints hierarchy or a direct or indirect parent node of the closest common root. One or the other of the "root" and "rootGltf' properties may be present. The "root" property may reference a node in the "MPEG_avatar_nodes" extension, while the "rootGltY' property may reference a node in the "nodes" root property.

The "joints" and "jointsGltf' properties may be lists of references to nodes. The "joints" and "jointsGltf' nodes may be used as joints in the skeleton. One or the other of the "joints" and "jointsGltf' properties may be present. The "joints" property may reference nodes in the "MPEG avatar_nodes" extension, while the "jointsGltf' property may reference nodes in the "nodes" root property.

The "inverseBindMatrices" and "inverseBindMatricesGltf' properties reference a float tensor. The tensor dimensions may be consistent with the "joints" property, e.g. [joint count, 4, 4]. One or the other of the properties may be present. The "inverseBindMatrices" property may reference data in the "MPEG_avatar_rawdata" extension, while the "inverseBindMatricesGltf' property may reference data in the "accessors" root property.

The "skinnings" property may be a list of *Skinning* objects (e.g., as described herein).

In some examples, a *Skeleton* may define an avatar skeleton, as shown by example in Table 22A.

Table 22A - Example of a Skeleton object definition

| Name | Type | Description | Determine Whether Required |
|------|------|-------------|---------------------------|
| name | string | Skin name. | No |
| mapping | string | To identify the skeleton purpose. | No |
| rootType | enum | Indicate the type of root being signaled, e.g., 0 may be to glTf, 1 may be to AJIF and the following may be reserved. Table 12 may include the supported types. | No |
| rootSource | integer | References a root object for the given type in "rootType." | No |
| jointsType | enum [1-*] | Indicate the type of joints being signaled, e.g., 0 may be to glTf, 1 may be to AJIF and the following may be reserved. Table 12 may include the supported types. | No |
| jointsSource | integer [1-*] | References a joints object for the given type in "jointsType." | No |
| inverseBindMa tricesType | enum | Indicate the type of matrices being signaled, e.g., 0 may be to glTf, 1 may be to AJIF and the following may be reserved. Table 12 may include the supported types. | No |
| inverseBindMa tricesSource | integer | References a matrix object for the given type in "inverseBindMatricesType." | No |
| skinnings | integer [1-*] | List of *Skinning.* | No |

For example, if "rootType" is equal to zero (0), the "rootSource" definition may be the same as the "rootGtf' definition (e.g., as described herein).

For example, if "rootType" is equal to one (1), the "rootSource" definition may be the same as the "root" definition (e.g., as described herein).

For example, if "jointsType" is equal to zero (0), the "jointsSource" definition may be the same as the "jointsGtf' definition (e.g., as described herein).

For example, if "jointsType" is equal to one (1), the "jointsSource" definition may be the same as the "joints" definition (e.g., as described herein).

For example, if "inverseBindMatricesType" is equal to zero (0), the "inverseBindMatricesSource" definition may be the same as the "inverseBindMatricesGltf' definition (e.g., as described herein).

For example, if "inverseBindMatricesType" is equal to one (1), the "inverseBindMatricesSource" definition may be the same as the "inverseBindMatrices" definition (e.g., as described herein).

The remaining property definitions may remain the same (e.g., as described herein).

A skeleton object may include a Skinning definition.

In some examples, a *Skinning* object may define the skin joints weight in a geometry, as shown by example in Table 23.

Table 23 - Example of a skinning definition

| Name | Type | Description | Determine Whether Required |
|---|---|---|---|
| name | string | Skinning name. | No |
| mapping | string | To identify the skinning semantics on the mesh. | No |
| mesh | integer | References a node in the "MPEG_avatar_nodes" extension. | No |
| meshGltf | integer | References a node in the "nodes" root property. | No |
| weights | integer | References an item in the "MPEG_avatar_rawdata" extension. The referenced item may be a float tensor [vertex count, joint count]. | No |
| weightsGltf | integer | References an item in the "accessors" root property. The referenced item may be a float tensor. | No |

The "mapping" property may define the skinning semantics on the mesh.

The "mesh" and "meshGltf' properties may reference a node. The node or at least one of its descendants may reference a geometry. The resulting mesh may be the concatenation of (e.g., all) geometries found during a depth-first traversal of the node hierarchy. One or the other of the "mesh" and "meshGltf" properties may be present. The "mesh" property may reference a node in the "MPEG_avatar_nodes" extension, while the "meshGltf" property may reference a node in the "nodes" root property.

The "weights" and "weightsGltf" properties may reference a float tensor in the "data" collection. The tensor may have multiple (e.g., two) dimensions. The first dimension may be equal to the number of vertices in the mesh provided by the "mesh" property. The second dimension may be equal to the number of joints in the parent skeleton. One or the other of the "weights" and "weightsGltf" properties may be present. The "weights" property may reference data in the "MPEG avatar_rawdata" extension, while the "weightsGltf" property may reference data in the "accessors" root property.

In some examples, a *Skinning* object may define the skin joints weight in a geometry, as shown by example in Table 24.

Table 24 - Example of a skinning definition

| Name | Type | Description | Determine Whether Required |
|---|---|---|---|
| name | string | Skinning name. | No |
| mapping | string | To identify the skinning semantics on the mesh. | No |
| meshType | enum | Indicate the type of mesh being signaled, e.g., 0 may be to glTf, 1 may be to AJIF and the following may be reserved. Table 12 may include the supported types. | No |
| meshSource | integer | References a mesh object for the given type in "meshType." | No |
| weightsType | enum | Indicate the type of weights being signaled, e.g., 0 may be to glTf, 1 may be to AJIF and the following may be reserved. Table 12 may include the supported types. | No |

(continued)

| Name | Type | Description | Determine Whether Required |
|------|------|-------------|----------------------------|
| weightsSource | integer | References a weights object for the given type in "weightsType." | No |

For example, if "meshType" is equal to zero (0), the "meshSource" definition may be the same as the "meshGtf" definition (e.g., as described herein).

For example, if "meshType" is equal to one (1), the "meshSource" definition may be the same as the "mesh" definition (e.g., as described herein).

The remaining property definitions may remain the same (e.g., as described herein).

For example, if "weightsType" is equal to zero (0), the "weightsSource" definition may be the same as the "weightsGtf" definition (e.g., as described herein).

For example, if "weightsType" is equal to one (1), the "weightsSource" definition may be the same as the "weights" definition (e.g., as described herein).

The remaining property definitions may remain the same (e.g., as described herein).

Multiple skinning interpolation may be performed.

Linear blend skinning may be defined, for example, in accordance with Eq. (2):

$$v = \sum_{i=1}^{n} w_i T_i v^b \qquad (2)$$

With reference to Eq. (2), $v$ may be the result vertex position, $w$ may be a scalar weight defined in propriety "weights," $v^b$ may be the rest/binding pose of the vertex defined by the "mesh" propriety, $T$ may be the transformation matrix of bone $i$ defined as "inverseBindMatrices" (e.g., as described herein), and $n$ may be the number of bones associated with the vertex $v'$.

The influence of (e.g., all) the bones over a (e.g., one) vertex may sum up to one, for example, in accordance with Eq. (3):

$$\sum_{i=1}^{n} w_i = 1 \qquad (3)$$

In the presence of several skinning weight matrices, Eq. (4) may be derived as follows:

$$v' = v + v'' \qquad (4)$$

$v''$ may be determined as a linear combination of positions, for example, in accordance with Eq. (5):

$$v'' = \sum_{i=1}^{n} w''_i T_i v^b \qquad (5)$$

Each $v'$ in Eq. (4) may be a displacement vector from the rest pose $v''$, which may assume the possibility of a linear combination of displacement vectors, e.g., as illustrated by Eq. (5). To this end, the propriety "skinnings" may be a list of weighted matrices w that may be linear combined, for example, in accordance with Eq. (6):

$$v' = v + v'' + \cdots + v^n \qquad (6)$$

Each $v$ may be a displacement vector resulting from varying the weighted matrix w in Eq. (2) and $n$ may be the number of matrices to combine. This approach may facilitate the separation of animations using linear blend skinning. This approach may allow the ability to mix different schemas into one model, e.g., deformation of the body at the joints combined with muscle deformations.

A scalar propriety $\omega$ may be attributed to measure the influence of a (e.g., each) weighted matrix w, for example, in accordance with Eq. (7):

$$v' = \omega v + \omega'' v'' + \cdots + \omega^n v^n \qquad (7)$$

A glTF extension may include a Controller definition.

In some examples, a *Controller* object may define components to animate the avatar, as shown by example in Table 25.

Table 25 shows an example of a *Controller* object definition

| Name | Type | Description | Determine Whether Required |
|---|---|---|---|
| name | string | Controller name. | No |
| mapping | string | To identify the controller type or semantics. | No |
| input | integer | References an item in the "MPEG_avatar_rawdata" extension. The referenced item may be a 1D tensor with increasing values. | No |
| inputGltf | integer | References an item in the "accessors" root property. The referenced item may be a SCALAR with increasing values. | No |
| channels | Channel [1-*] | List of *Channel.* | ü Yes |

The "mapping" property may identify the controller type or semantics.

The "input" and "inputGltf' properties may reference a 1D tensor T with increasing values, e.g. for any j>i, T[j] >= T[i]. The "input" and "inputGltf' properties may define the input weights. One or the other of the properties may be present. The "input" property may reference data in the "MPEG_avatar_rawdata" extension, while the "inputGltf" property may reference data in the "accessors" root property. If a weight description is not present/provided, the input weights may be, for example, [0,1].

The "channels" property may be a list of *Channel* (e.g., as described herein).

A controller may animate the avatar, for example, by applying (e.g., all) the transformation in the channels.

In some examples, a *Controller* object may define components to animate the avatar, as shown by example in Table 26.

Table 26 shows an example of a *Controller* object definition

| Name | Type | Description | Determine Whether Required |
|---|---|---|---|
| name | string | Controller name. | No |
| mapping | string | To identify the controller type or semantics. | No |
| inputType | enum | Indicate the type of input being signaled, e.g., 0 may be to glTf, 1 may be to AJIF and the following may be reserved. Table 12 may include the supported types. | No |
| inputSource | integer | References an input object for the given type in "inputType." | No |
| channels | Channel [1-*] | List of *Channel.* | ü Yes |

For example, if "inputType" is equal to zero (0), the "inputSource" definition may be the same as the "inputGltf" definition (e.g., as described herein).

For example, if "inputType" is equal to one (1), the "inputSource" definition may be the same as the "input" definition (e.g., as described herein).

The remaining property definitions may remain the same (e.g., as described herein).

A controller object definition may include a Channel definition.

In some examples, a *Channel* object may define data to animate a part of the avatar, or another controller, as shown by example in Table 27.

Table 27 shows an example of a *Channel* object definition

| Name | Type | Description | Determine Whether Required |
|---|---|---|---|
| node | integer | References a node in the "MPEG_avatar_nodes" extension. | No |
| nodeGltf | integer | References a node in the "nodes" root property. | No |
| path | string | Identifies a component in the node referenced by "node." | No |
| interpolation | string | Defines an interpolation method. | No, default may be "LINEAR" |
| output | integer | References an item in the "MPEG_avatar_rawdata" extension. The referenced item may be a tensor. The dimension of the tensor depends on the other properties. | No |
| outputGltf | integer | References an item in the "accessors" root property. The layout of the item depends on the other properties. | No |
| controller | integer | References a controller in the "MPEG_avatar_controllers" extension. | No |
| animation | integer | References a controller in the "animations" root property. | No |
| min | number | Controller minimum weight. Ignored if "animation" is not defined. | No, default 0 |

The target of the controller may be defined in multiple (e.g., three) different ways, for example, depending on the present properties.

For example, if "node" (e.g., or "nodeGltf") and "path" are present (e.g., "animation," "min," and "controller" may not be present), the channel may encode the transform of a node. The "node" and "nodeGltf" properties may reference a node. The "node" and "nodeGltf" properties may be exclusive. The "node" property may reference a node in the "MPEG avatar_nodes" extension. The "nodeGltf" property may reference a node in the "nodes" root property.

For example, if "animation" (e.g., and possibly "min") is/are present (e.g., "node," "nodeGltf," and "controller" may not be present), the channel may encode the transform of a glTF animation referenced by "animation." The animation time may be shifted by the value of the "min" property, e.g., if present. For example, if "min" is -1.3, the animation time may be decreased by -1.3, e.g., as if the animation was starting at -1.3 seconds.

For example, if "controller" is present (e.g., "node," "nodeGltf," "animation," and "min" may not be present), the channel may encode the transform of a controller of MPEG_avatar_controllers referenced by "controller."

The "output"/"outputGltf" and "interpolation" properties may encode the function that transforms the target of the controller. The function may change the values of the target given the controller weight, which may (e.g., always) be one or more float values. The controller function may be a function $f(w) \in \mathbb{R}^s$, where w may be the weight of the controller and s may be the number of values in the target of the controller. For example, if the target of the controller is the scale of a node, s may be equal to three (3), e.g., since three values may be used to define the scale of a node. A scale (e.g., three values) may be computed for (e.g., all) possible controller weights using the controller function.

The controller function may be defined by, for example, the input values (e.g., defined by the "input" property of the parent object *Controller*), the number of target values s (e.g., depends on the targeted component, as described herein), the interpolation method (e.g., defined by the "interpolation" property) method, and/or the output values (e.g., defined in the "output" or in the "outputGltf" property). The "output" and "outputGltf" properties may be exclusive. The "output" may reference an item in the "MPEG_avatar_rawdata" extension. The "outputGltf" property may reference an item in the "accessors" root property. The applicable method and algorithms may be the same as the method and algorithms used for glTF 2.0.

The following discussion provides example details about possible controller targets. In some examples, the target may be a component referenced node and a path (e.g., the "node"/"nodeGltf" and "path" properties may be present). Examples are provided for the possible targets. Targets may be for one or more of the following: the scale of a node; the rotation of a node; the matrix of a node; the blendshape weights of a node; and/or the texture displacement weights of a node.

For the scale of a node, "node" or "nodeGltf" may reference a node and "path" may be "scale." In this case, the target value size may be, for example, three (3), and the scale of the node may be animated by the channel.

For the rotation of a node, "node" or "nodeGltf" may reference a node and "path" may be "rotation." In this case, the target value size may be, for example, four (4), and the rotation of the node may be animated by the channel.

For the translation of a node, "node" or "nodeGltf' may reference a node and "path" may be "translation." In this case, the target value size may be, for example, three (3) and the translation of the node may be animated by the channel.

For the matrix of a node, "node" or "nodeGltf" may reference a node and "path" may be "matrix." In this case, the target value size may be, for example, 16 and the matrix transform of the node may be animated by the channel.

For the blendshape weights of a node, "node" or "nodeGltf" may reference a node, which may reference a geometry or at least one descendant that references a geometry. In this case, the target value size may be, for example, the total number of blendshapes found in the mesh built through a depth-first traversal of the node hierarchy. The order of the weights (e.g., and thus the blendshape to weight index correspondence) may depend on the mesh built through a depth-first traversal of the node hierarchy. The channel may animate the blendshape weights.

For the texture displacement weights of a node, "node" or "nodeGltf" may reference a node that references texture with displacement(s) or with at least one descendant that references a texture with displacement(s). In this case, the target value size may be, for example, the total number of texture displacements found in the mesh built through a depth-first traversal of the node hierarchy. The order of the weights (e.g., and thus the texture displacements to weight index correspondence) may depend on the mesh built through a depth-first traversal of the node hierarchy. The channel may animate the texture displacements weights.

In some examples, the target may be a controller (e.g., "controller" property is set). The "controller" property may (e.g., when the target is a controller) reference another controller in the "MPEG_avatar_controllers" extension. The references may not lead to circular dependencies. In this case, the weight size may be, for example, one (1), and the transform may update the weight of the referenced controller.

In some examples, the target may be an animation (e.g., "animation" property is set). The "animation" property may (e.g., if the target is an animation) reference an item in the "animations" root property. In this case, the weight size may be, for example, one (1), and the transform may update the time of the referenced animation. The animation may be shifted by the value of "min," e.g., if the "min" property is present.

In some examples, a *Channel* object may define data to animate a part of the avatar, or another controller, as shown by example in Table 28.

Table 28 shows an example of a *Channel* object definition

| Name | Type | Description | Determine Whether Required |
|---|---|---|---|
| nodeType | enum | Indicate the type of node being signaled, e.g., 0 may be to gITf, 1 may be to AJIF and the following may be reserved. Table 12 may include the supported types. | No |
| nodeSource | integer | References a node object for the given type in "nodeType." | No |
| path | string | Identifies a component in the node referenced by "node." | No |
| interpolation | string | Defines an interpolation method. | No, default may be "LINEAR" |
| outputType | enum | Indicate the type of output being signaled, e.g., 0 may be to gITf, 1 may be to AJIF and the following may be reserved. Table 12 may include the supported types. | No |
| outputSource | integer | References an output object for the given type in "outputType." | No |
| controllerType | enum | Indicate the type of animation being signaled, e.g., 0 may be to gITf, 1 may be to AJIF and the following may be reserved. Table 12 may include the supported types. | No |
| controllerSource | integer | References an animation object for the given type in "animationType." | No |
| min | number | Controller minimum weight. Ignored if "animation" is not defined. | No, default 0 |

The model may evaluate a (e.g., each) type and execute or encode appropriately to the type, e.g., gITF or AJIF data encoding.

For example, if "nodeType" is equal to zero (0), the "nodeSource" definition may be the same as the "nodeGltf" definition (e.g., as described herein).

For example, if "nodeType" is equal to one (1), the "nodeSource" definition may be the same as the "node" definition (e.g., as described herein).

For example, if "outputType" is equal to zero (0), the "outputSource" definition may be the same as the "outputGltf" definition (e.g., as described herein).

For example, if "outputType" is equal to one (1), the "outputSource" definition may be the same as the "output" definition (e.g., as described herein).

For example, if "controllerType" is equal to zero (0), the "controllerSource" definition may be the same as the "animation" definition (e.g., as described herein).

For example, if "controllerType" is equal to one (1), the "controllerSource" definition may be the same as the "controller" definition (e.g., as described herein).

The remaining property definitions may remain the same (e.g., as described herein).

A glTF extension may include a level of detail (LOD) definition.

In some examples, a LOD object may include (e.g., all) the data for the avatar at a given level of detail, as shown by example in Table 29.

Table 29 - Example of LOD object definition

| Name | Type | Description | Determine Whether Required |
|------|------|-------------|----------------------------|
| name | string | LOD name. | No |
| lod | integer | Indicates the level of details. Lower values correspond to higher level of details. | No, default 0 |
| mesh | integer | References a node in the "MPEG_avatar_nodes" extension. | No |
| meshGltf | integer | References a node in the "nodes" root property. | No |
| skeletons | integer [1-*] | List of references to skeletons in the "MPEG_avatar_skeletons" extension. | No |
| skins | integer [1-*] | List of references to skeletons in the "skins" root property. | No |
| controllers | integer [1-*] | List of references to controllers in the "MPEG_avatar_controllers" extension. | No |
| animations | integer [1-*] | List of references to controllers in the "animations" root property. | No |
| extraControllers | Object | Optional features like hair, gaze, accessories, springbone, etc. | No |

The "lod" property may indicate the level of detail. Lower values may correspond to a higher level of detail. For example, a lod of zero (0) may have more details than a lod of one (1).

The "mesh" and "meshGltf" properties may reference a node. The node or one of its descendants may reference a geometry. The avatar mesh at a lod may be the merge of (e.g., all) properties found in a node and its descendants (e.g., as described herein). One or the other of the "mesh" and "meshGltf" properties may be present. The "mesh" property may reference a node in the "MPEG avatar_nodes" extension, while the "meshGltf" property may reference a node in the "nodes" root property.

The "skeletons" list may reference skeletons in the "MPEG_avatar_skeletons" extension. Skeletons may be used to animate the avatar mesh at the lod.

The "skins" list may reference skins in the "skins" root property. Skins may be used to animate the avatar mesh at the lod.

The "controllers" list may reference controllers in the "MPEG_avatar_controllers" extensions. Controllers may be used to animate the avatar mesh at the lod.

The "animations" list may reference animations in the "animations" root property. Animations may be used to animate the avatar mesh at the lod.

In some examples, a LOD may include (e.g., all) the data for the avatar at a given level of detail, as shown by example in Table 30.

Table 30 - Example of LOD object definition

| Name | Type | Description | Determine Whether Required |
|---|---|---|---|
| name | string | LOD name. | No |
| lod | integer | Indicates the level of details. Lower values correspond to higher level of details. | No, default 0 |
| mesh Type | enum | Indicate the type of mesh being signaled, e.g., 0 may be to glTf, 1 may be to AJIF and the following may be reserved. Table 12 may include the supported types. | No |
| meshSource | Integer | References a mesh object for the given type in "meshType." | No |
| skeleton Type | enum [1-*] | Indicate the type of skeleton being signaled, e.g., 0 may be to glTf, 1 may be to AJIF and the following may be reserved. Table 12 may include the supported types. | No |
| skeletonSource | integer [1-*] | References a skeleton object for the given type in "skeletonType." | No |
| controllerType | enum [1-*] | Indicate the type of animation being signaled, e.g., 0 may be to glTf, 1 may be to AJIF and the following may be reserved. Table 12 may include the supported types. | No |
| controllerSource | integer [1-*] | References an animation object for the given type in "animationType." | No |

The "lod" property may indicate the level of detail. Lower values may correspond to a higher level of detail. For example, a lod of zero (0) may have more details than a lod of one (1).

For example, if "meshType" is equal to zero (0), the "meshSource" properties may refence a node in nodes "root" property. The node or one of its descendants may reference a geometry. The avatar mesh at the lod may be the merge of (e.g., all) properties found in a node and its descendants (e.g., as described herein). For example, if "meshType" is equal to one (1), the "meshSource" property may reference a node in the "MPEG_avatar_nodes" extension.

For example, if "skeletonType" is equal to one (1), the "skeletonSource" list may reference skeletons in the "MPEG_avatar_skeletons" extension. Skeletons may be used to animate the avatar mesh at the lod.

For example, if "skeletonType" is equal to zero (0), the "skeletonSource" list may reference skins in the "skins" root property. Skins may be used to animate the avatar mesh at the lod.

For example, if "controllerType" is equal to one (1), the "controllerSource" list may reference controllers in the "MPEG_avatar_controllers" extensions. Controllers may be used to animate the avatar mesh at the lod.

For example, if "controllerType" is equal to zero (0), the "controllerSource" list may reference animations in the "animations" root property. Animations may be used to animate the avatar mesh at the lod.

AJIF may be converted to glTF 2.0. An avatar in AJIF format may be converted to a glTF 2.0 file, with or without the glTF extensions. The resulting file may be read, for example, by a glTF parser (e.g., glTF 2.0 parser) that may not use extensions, that may use one or more extensions (e.g., MPEG_node_avatar and/or MSFT_lod), or that supports one or more extensions described herein.

A representation of an avatar in AJIF format may be (e.g., directly) created or converted from another format (e.g., DNA, VRM, or a combination). The representation of an avatar in AJIF format may include or may be based on a definition of AJIF components.

AJIF raw data may be converted into glTF 2.0 without the use of an extension.

AJIF raw data may (e.g., also) be encoded using the MPEG_avatar_rawdata extension. The process may be straightforward, for example, since there may not be differences between the *RawData* properties in AJIF and in MPEG_avatar_rawdata.

RawData types may include a Dense tensor type.

glTF may support one or more tensor formats. A glTF accessor without extensions may be created for tensor dimensions and dtypes supported by glTF. Table 31 shows an example of supported tensor dimensions and corresponding accessor types. Table 32 shows an example of supported tensor dtypes and corresponding accessor component types.

Table 31 - Examples of tensor dimensions supported by glTF 2.0 and corresponding accessor types

| Tensor dimension | Accessor type |
|---|---|
| $n$ | SCALAR |
| $n \times 2$ | VEC2 |
| $n \times 3$ | VEC3 |
| $n \times 4$ | VEC4 |
| $n \times 2 \times 2$ | MAT2 |
| $n \times 3 \times 3$ | MAT3 |
| $n \times 4 \times 4$ | MAT4 |

Table 32 - Examples of tensor dtypes and corresponding accessor component types

| Tensor dtype | Accessor component type |
|---|---|
| i8 | BYTE |
| u8 | UNSIGNED_BYTE |
| i16 | SHORT |
| u16 | UNSIGNED_SHORT |
| u32 | UNSIGNED_INT |
| f32 | FLOAT |

The tensor values may be (e.g., directly) encoded in the accessor, for example, without any change as defined by glTF 2.0.

glTF may not support one or more tensor formats. For example, if the dimensions of a tensor are supported by glTF 2.0 (e.g., as shown by example in Table 31) but not the dtype of the tensor (e.g., as shown by example in Table 32), the application may check if the actual values of the tensor can be converted (e.g., without loss) to a dtype supported by glTF. For example, if a tensor has a dtype of "i64" (e.g., signed integer 64-bit values), the application may check if (e.g., all) its values may be converted (e.g., without loss) to "i16"

(e.g., signed integer 16-bit). If a conversion would be lossless, the dtype of the tensor may be changed and an accessor without extension may be created. The accessor type and component type may be defined following correspondences in Table 31 and Table 32. The tensor data may be converted to the compatible dtype and encoded using glTF 2.0 rules. The conversion may fail, for example, if the conversion is not possible.

RawData types may include a Sparse tensor type in AJIF (e.g., as described herein).

glTF may support one or more tensor formats. A glTF accessor without extension may be created for tensor dimensions, dtypes, and itypes supported by glTF. Table 31 shows examples of supported tensor dimensions and the corresponding accessor types. Table 32 shows examples of supported tensor dtypes and corresponding accessor component types. Table 33 shows examples of supported tensor itypes and corresponding accessor component types.

Table 33 - Examples of tensor itypes and corresponding accessor component types

| Tensor itype | Accessor component type |
|---|---|
| i8 | BYTE |
| u8 | UNSIGNED_BYTE |
| i16 | SHORT |
| u16 | UNSIGNED_SHORT |
| u32 | UNSIGNED_INT |

A sparse tensor may be represented in AJIF as a list of 2-tuples (e.g., index, value). The values (e.g., all the values) may be grouped into a (e.g., single) list and may be encoded without any change in the accessor, e.g., as defined by glTF 2.0. The indices (e.g., all the indices) may be grouped into a (e.g., single) list and may be encoded without any change in the accessor "sparse" property, e.g., as defined by glTF 2.0.

If the dimensions of the tensor are supported by glTF 2.0 (e.g., as shown by example in Table 31) but not the dtype of the tensor (e.g., as shown by example in Table 32), the application may check if the actual values of the tensor can be converted (e.g., without loss) to a dtype supported by glTF. If the conversion is possible, the application may (e.g., also) check if the actual indices of the tensor can be converted (e.g., without loss) to an itype supported by glTF (e.g., as shown by example in Table 33). If the conversion is (e.g., also) possible, the tensor values and indices may be converted to the compatible dtype and itypes and encoded using glTF 2.0 rules. The conversion may fail, for example, if a conversion is not possible.

RawData types may include an Image type in AJIF (e.g., as described herein).

A glTF format may not encode raw image data and may use one of the supported image formats (e.g., PNG or JPEG). For example, if the image from AJIF is raw image data, the application may (e.g., first) try to encode the image in one of the file formats supported by glTF without loss. The conversion may change the pixel dtype, for example, as long as there is no data loss. The conversion may fail, for example, if conversion without loss is not possible.

glTF may support one or more Image file formats. For example, if the image from AJIF is encoded in an image file format supported by glTF, a glTF image may be created. The content may be the encoded image without any change.

glTF may not support one or more Image file formats. For example, if the image from AJIF is encoded in an image file format that is not supported by glTF, the application may (e.g., first) try to convert the image to a supported format. If the conversion is possible/succeeds, a glTF image may be created. The content may be the converted image. The conversion may fail, for example, if the conversion is not possible.

RawData types may include a Tuples type in AJIF.

The glTF format may not support tuples. The application may (e.g., first) try to convert a tuple to a format supported by glTF. The conversion may (e.g., only) work, for example, if (e.g., all) the tuples have the same size, e.g., a list of 3-tuples. Context may (e.g., also) be taken into account, for example, since glTF may (e.g., sometimes) use the accessor type SCALAR for tuples, e.g., the vertex indices of a primitives. If the conversion is possible, (e.g., all) the values of the tuples may be collected into a (e.g., single) list of values. In The conversion may fail, for example, if the conversion is not possible (e.g., tuples do not have the same size).

An accessor may be created, for example, if the tuples dtype is supported by glTF (e.g., as shown by example in Table 32). The content may be the list of tuple values. If the dtype of tuples is not supported by glTF, the application may try to convert values to a dtype supported by glTF without loss. If the conversion is possible, an accessor may be created. The content may be the list of converted tuple values. The conversion may fail, for example, if a conversion without loss is not possible.

A geometry may define a mesh with associated properties.

Encoding may occur without extensions.

The conversion may start with the creation of a glTF mesh with a single primitive.

The AJIF geometry name (e.g., if the name exists) may be copied to the "name" property of the glTF mesh.

If the AJIF geometry has normals or uvs, the application may (e.g., first) check if there is the same number of normals and uvs as vertices. In there are no differences, then nothing may be done. If there are differences, a process may be run to ensure that vertices, normal, and uvs use the same topology. The process may be accomplished, for example, with the duplication of vertices. As described in examples, vertices, normals, and uvs may be converted, for example, if the original vertices, normals, and uvs were not the same.

If the vertices of the AJIF geometry can be converted into a format supported by glTF (e.g., as described herein), an accessor with the data may be created and a "POSITION" attribute in the primitive may reference it. The conversion may fail, for example, if the conversion is not possible.

If the AJIF geometry has normal that can be converted into a format supported by glTF (e.g., as described herein), an accessor with the data may be created and a "NORMAL" attribute in the primitive may reference it. The conversion may fail, for example, if the conversion is not possible.

If the AJIF geometry has uvs, for an (e.g., each) item in the uvs list that can be converted into a format supported by glTF (e.g., as described herein), an accessor with the data may be created and a "TEXCOORD_n" attribute in the primitive may reference it, where $n$ may be the index of the item in the uvs list. The conversion may fail, for example, if the conversion is not possible for one or more of the items in the uvs list.

If the faces property in the AJIF geometry has vertices that can be converted into a format supported by glTF (e.g., as described herein), an accessor with the data may be created and an "indices" attribute in the mesh may reference it. The conversion may fail, for example, if the conversion is not possible.

If the AJIF geometry has blendshapes, a "targets" property may be created in the primitive. For a (e.g., each) blendshape, the application may try to convert the displacements of the blendshape into a format supported by glTF (e.g., as described herein). If the conversion is possible/successful, an accessor with the data may be created and an object may be added to the "targets" property with a "POSITION" attribute that references it. If the conversion fails (e.g., is not possible), the blendshapes may be ignored (e.g., the features may be made available in the extension).

An "extras" property in the mesh may be created, for example, if blendshapes has names. For example, inside "extras," a "targetNames" property may be created with a list of blendshape names. One or more properties (e.g., the "mapping" and "side" properties) may be ignored (e.g., the features may be made available in the extension).

A process may run, for example, if the AJIF geometry has textures, e.g., and if at least one the textures is associated with a type supported by glTF (e.g., "normal," "occlusion," "emissive," "baseColor," or "metallicRoughness"), The process may be ignored, for example, if the AJIF geometry does not have textures. The process may include, for example, creating a new item in the "materials" root property. A "material" property may be created in the mesh, which may reference the new material. For an (e.g., each) AJIF texture with a type supported by glTF, a new item may be created in the "textures" root property. The application may try to convert the AJIF texture into a format supported by glTF (e.g., as described herein). A successful conversion may result in the creation of an image with the data. The "source" property of the new texture may reference the created image. The conversion may fail, for example, if the AJIF texture cannot be converted into a format supported by glTF. The AJIF texture name (e.g., if it exists) may be copied into the "name" property of the texture. Depending on the type of the texture, a new *TextureInfo* property may be created in the material. For type "normal," the *TextureInfo* property may be the "normalTexture" of the material. For type "occlusion," the *TextureInfo* property may be the "occlusionTexture" of the material. For type "emissive," the *TextureInfo* property may be the "emissiveTexture" of the material. For type "baseColor," the *TextureInfo* property may be the "baseColorTexture" of the "pbrMetallicRoughness" of the material. For type "metallicRoughness," the *TextureInfo* property may be the "metallicRoughness ColorTexture" of the "pbrMetallicRoughness" of the material. For a (e.g., each) *TextureInfo,* the "index" property may reference the corresponding created texture and the "texCoord" may be the index of the AJIF texture in the AJIF geometry textures list.

AJIF geometry texture displacements (e.g., if they exist) may be ignored (e.g., the features may be made available in the extension).

Encoding may be performed with extensions.

A new *Geometry* (e.g., as described herein) may be added to the "geometries" property of the "MPEG avatar_geometries" extension.

For example, if the AJIF geometry has no normals and uvs, or if the AJIF geometry has normals and uvs using the same topology as vertices, the created *Geometry* in "MPEG avatar_geometries" may use the same accessors as the glTF mesh. The "vertices" property may not be defined. The "verticesGltf" property may be defined and may reference the vertices accessor created (e.g., as described herein). If there are normals, the "normals" property may not be defined. The "normalsGltf" property may be defined and may reference the normals accessor created (e.g., as described herein). If there are uvs, the "uvs" property may not be defined. The "uvsGltf" property may be defined and may reference the uvs accessors created (e.g., as described herein). In the "faces" property of the *Geometry,* the "vertices" property may not be defined. The "verticesGltf" property may be defined and may reference the "indices" accessor created (e.g., as described herein).

For example, if the AJIF geometry has normals or uvs with a different topology than vertices, the items in the "MPEG_avatar_rawdata" extension may be created to store the corresponding tensors. The "verticesGltf" property may not be defined. The "vertices" property may be defined and may reference the vertices raw data created in "MPEG_avatar_rawdata." If there are normals, the "normalsGltf" property may not be defined. The "normals" property may be defined and may reference the normals raw data created in "MPEG_avatar_rawdata." If there are uvs, the "uvsGltf" property may not be defined. The "uvs" property may be defined and may reference the uvs raw data created in "MPEG_avatar_rawdata." In the "faces" property of the *Geometry,* the "verticesGltf" property may not be defined. The "vertices" property may be defined and may reference the vertex indices raw data created in "MPEG_avatar_rawdata." In the "faces" property of the *Geometry,* the "normalsGltf" property may not be defined. The "normal" property may be defined and may reference the normal indices raw data created in "MPEG_avatar_rawdata." In the "faces" property of the *Geometry,* the "uvsGltf" property may not be defined. The "uvs" property may be defined and may reference the uvs indices raw data created in "MPEG_avatar_rawdata."

For example, if the AJIF geometry has blendshapes, a "blendshapes" property may be created. For a (e.g., each) blendshape, a new item in "blendshapes" may be created. If the blendshape was successfully encoded with a glTF accessor (e.g., as described herein), the "displacements" property may not be defined. The "displacementsGltf" property may be defined and may reference the glTF accessor. If the blendshape was not successfully encoded with a glTF accessor, the "displacementsGltf" property may not be defined. The "displacements" property may be defined and may reference a newly created raw data in "MPEG_avatar_rawdata" with the blendshape displacements. The "mapping" and "side" properties may be set, e.g., if the information is in a blendshape.

For example, if the AJIF geometry has textures, a "textures" property may be created. For a (e.g., each) texture, a new item in "textures" may be created. If the texture was successfully encoded with a glTF accessor (e.g., as described herein), the "image" property may not be defined. The "imageGltf" property may be defined and may reference the glTF accessor. If the texture was not successfully encoded with a glTF accessor, the "imageGltf" property may not be defined. The "image" property may be defined and may reference a newly created raw data in "MPEG_avatar_rawdata" with the texture image. The "type" property may be defined with the type of the texture. The "uvs" property may be defined with the value of the uvs index in the texture. AJIF texture displacements (e.g., if they exist) may be encoded in the "basis" property of the texture.

Encoding may be performed with respect to nodes. An encoding may create the same node hierarchies with the same indices.

Encoding may be performed without extensions. For example, for an (e.g., each) AJIF node, a corresponding node (e.g. with the same index) may be created in the "nodes" root property. One or more of the following properties (e.g., if present in the AJIF node) may be copied into the newly created node: "name," "scale," "rotation," "translation," "matrix," and/or "children."

A "mesh" property may be created, for example, if the AJIF node refers to a geometry and may reference the corresponding mesh created (e.g., as described herein).

An AJIF node mapping (e.g., if it exists) may be ignored (e.g., the feature may be made available in the extension).

Encoding may be performed with extensions. For example, for an (e.g., each) AJIF node, a corresponding node (e.g. with the same index) may be created in the "nodes" property of the "MPEG_avatar_nodes" extension. One or more of the following properties (e.g., if present in the AJIF node) may be copied into the newly created node: "name," "mapping," "scale," "rotation," "translation," "matrix," and/or "children."

A "geometry" property may be created, for example, if the AJIF node refers a geometry. The geometry property may reference the corresponding mesh created (e.g., as described herein). A "geometryGltf" property may (e.g., also) be created (e.g., in this case) and may reference the same mesh as the corresponding node in the "nodes" root property.

A "childrenGltf" property may be created, for example, if the AJIF node has children. The "childrenGltf" property may reference the same child nodes as the corresponding node in the "nodes" root property.

Encoding may be performed with respect to a Skeleton property.

Encoding of AJIF skeleton properties may be performed without extensions. For example, for an (e.g., each) AJIF skeleton, a corresponding skin (e.g. with the same index) may be created in the "skins" root property. An AJIF skeleton name (e.g., if it exists) may be copied into the "name" property of the skin.

An AJIF skeleton mapping (e.g., if it exists) may be ignored (e.g., the feature may be made available in the extension).

If the AJIF skeleton has a root, the "skeleton" property of the skin may be defined with the same index (e.g., because, as described herein, the node indices were not changed).

The "joints" property of the skin may be defined with the same indices as the indices of the joints of the skeleton (e.g., because, as described herein, the node indices were not changed).

If the AJIF skeleton has inverse bind matrices that can be converted into a format supported by glTF (e.g., as described herein), an accessor with the data may be created and an "inverseBindMatrices" property in the skin may reference it. If conversion is not possible, the inverse bind matrices may be ignored (e.g., the feature may be made available in the extension).

The AJIF skeleton may have skinnings. For an (e.g., each) AJIF skinning in the skeleton, the "mesh" property may reference a node that may define a mesh, e.g. one or more AJIF geometries (e.g., as described herein). For an (e.g., each) AJIF geometry, a glTF mesh with a single primitive may be created (e.g., as described herein). For a (e.g., each) of the glTF meshes, a "JOINTS_$n$" key in the primitive attribute may be created, where $n$ may be the index of the AJIF skinning in the AJIF skeleton. The "JOINTS_$n$" attribute may reference a new accessor including the weights corresponding to (e.g., one of) the glTF meshes. The values of the weights may be defined by the "weights" property of the AJIF skinning. An (e.g., each) accessor may be created if the AJIF skinning weights are convertible to glTF accessor format (e.g., as described herein). The skinning may be ignored, for example, if the AJIF skinning weights are not convertible to glTF. The name and mapping of the AJIF skinning may be ignored (e.g., the features may be made available in the extension).

Encoding of AJIF skeleton properties may be performed with extensions. For example, for an (e.g., each) AJIF skeleton, a new *Skeleton* item in the "skeletons" property of the "MPEG_avatar_skeletons" extension may be created.

An AJIF skeleton name (e.g., if it exists) may be copied into the "name" property of the *Skeleton.*

An AJIF skeleton mapping (e.g., if it exists) may be copied into the "mapping" property of the *Skeleton.*

If the AJIF skeleton has a root, and if it was possible to encode the root and its descendants in a glTF node (e.g., as described herein), then the AJIF skeleton root may be copied into the "rootGltf" of the *Skeleton.* Otherwise, the AJIF skeleton root may be copied into the "root" property.

The joints of the AJIF skeleton may be copied into the "jointsGltf" properties of the *Skeleton* if it was possible to encode all of the joints of the AJIF skeleton in glTF nodes (e.g., as described herein). Otherwise, the joints of the AJIF skeleton may be copied into the "joints" property.

If the AJIF skeleton has inverse bind matrices that can be converted into a format supported by glTF (e.g., as described herein), the "inverseBindMatrices" of the *Skeleton* may not be defined. The "inverseBindMatricesGltf" of the *Skeleton* may be defined, and may reference the accessor created (e.g., as described herein) for encoding the inverse bind matrices in the "accessors" root property. If the inverse bind matrices of the AJIF skeleton cannot be converted into a format supported by glTF (e.g., as described herein), the "inverseBindMatricesGltf" of the *Skeleton* may not be defined. The "inverseBindMatrices" of the *Skeleton* may be defined, and may reference a newly created raw data in "MPEG_avatar_rawdata" with the content of the inverse bind matrices.

If the AJIF skeleton has skinnings, a "skinnings" property may be created in the *Skeleton.* For a (e.g., each) skinning in the AJIF skeleton, a "name" property may be created in the *Skeleton,* e.g., if the AJIF skinning has a name. A "mapping" property may be created in the *Skeleton,* e.g., if the AJIF skinning has a mapping. The "meshGltf" property may be defined in the *Skeleton,* for example, if it is/was possible to encode without loss the AJIF mesh of the AJIF skinning. Otherwise (e.g., if it is/was not possible to encode without loss), the "mesh" property may be defined with a reference to the encoding of the AJIF mesh of the AJIF skinning. If the mesh glTF node and its descendants reference (e.g., only) a single glTF mesh, a "weightsGltY' property may be defined in the *Skeleton* and may reference the accessor created (e.g., as described herein) for encoding the skinning weights in the "accessors" root property. Otherwise (e.g., if the mesh glTF node and its descendants do not reference (only) a single glTF mesh), a "weights" property may be defined in the *Skeleton* and may reference a newly created raw data in "MPEG_avatar_rawdata" with the weights of the AJIF skinning.

Encoding may be performed with respect to AJIF Controllers.

Encoding of AJIF controllers may be performed without extensions. For example, for an (e.g., each) AJIF controller, a new animation may be created in the "animations" root property. A controller name (e.g., if it exists) may be copied in a "name" property of the animation.

An AJIF controller mapping (e.g., if it exists) may be ignored (e.g., the feature may be made available in the extension).

The input of the AJIF controller may be converted into a format supported by glTF (e.g., as described herein). An accessor with the data may be created. The "input" property of (e.g., all) the samplers created may reference the accessor. If the input cannot be converted, the AJIF controller may be ignored, and the creation of the animation may be canceled.

For an (e.g., each) AJIF channel in the AJIF controller, a sampler may be defined in the animation. The interpolation method of the AJIF channel may be copied to the "interpolation" property of the sampler. If the output of the AJIF channel can be converted into a format supported by glTF (e.g., as described herein), an accessor with the data may be created and the "output" property of the sampler may reference it. If the input cannot be converted, the AJIF controller may be ignored, and the creation of the animation may be canceled.

For an (e.g., each) AJIF channel in the AJIF controller, a channel may be (e.g., also) defined in the animation. The "sampler" property of the glTF channel may refer to the sampler created for the corresponding AJIF channel. The "node" property of "target" property of the glTF channel may reference the same node as the AJIF channel. The "path" property of a "target" property of the glTF channel may be copied from the path of the AJIF channel if the "path" property references an object in glTF 2.0. If the path of the AJIF channel references an object outside properties defined in glTF 2.0 (e.g., in an extension), the AJIF controller may be ignored, and the creation of the animation may be canceled.

Encoding of AJIF controllers may be performed with extensions. For example, for an (e.g., each) AJIF controller, a new *Controller* item in the "controllers" property of the "MPEG_avatar_contollers" extension may be created.

An AJIF controller name (e.g., if it exists) may be copied into the "name" property of the *Controller.*

An AJIF controller mapping (e.g., if it exists) may be copied into the "mapping" property of the *Controller.*

If the input of the AJIF controller can be converted into a format supported by glTF (e.g., as described herein), the "input" property of the *Controller* may not be defined. The "inputGltf" property of the *Controller* may be defined, and may reference the accessor created (e.g., as described herein) for encoding the input in the "accessors" root property. If the input of the AJIF controller cannot be converted into a format supported by glTF (e.g., as described herein), the "inputGltf' property of the *Controller* may not be defined. The "input" property of the *Controller* may be defined, and may reference a newly created raw data in "MPEG_avatar_rawdata" with the content of the input.

For an (e.g., each) AJIF channel in the AJIF controller, a *Channel* may be added to the "channels" property of the *Controller.* If the AJIF channel has a node, a "node" property may be defined in the *Channel* and may reference the same node. If the AJIF channel has a path, a "path" property may be defined in the *Channel* and may include the same value. If the AJIF channel has a controller, a "controller" property may be defined in the *Channel* and may reference the same controller. If the AJIF channel has an interpolation, an "interpolation" property may be defined in the *Channel* and may include the same value. If the output of the AJIF channel can be converted into a format supported by glTF (e.g., as described herein), the "output" property of the *Channel* may not be defined. The "outputGltf" of the *Channel* may be defined, and may reference the accessor created (e.g., as described herein) for encoding the output of the corresponding animation. If the output of the AJIF controller cannot be converted into a format supported by glTF (e.g., as described herein), the "outputGltf' property of the *Channel* may not be defined. The "output" property of the *Channel* may be defined, and may reference a newly created raw data in "MPEG_avatar_rawdata" with the content of the output.

Encoding may be performed with respect to AJIF Levels Of Details (LOD).

Encoding of AJIF LODs may be performed with one or more extensions. For example, for an (e.g., each) AJIF Level Of Detail (LOD), a node may be created in the "nodes" root property. The nodes may be created after creating nodes for AJIF node properties (e.g., as described herein). The AJIF LODs may be processed from the highest level of details (e.g., "lod" property lowest value) to the lowest level of details (e.g., "lod" property highest value).

An AJIF LOD name (e.g., if it exists) may be copied into the "name" property of the node.

The "lod" property of the AJIF LOD may be ignored (e.g., the feature may be made available in the extension).

An AJIF LOD reference to a mesh (e.g., if it exists) may be copied in the "mesh" property of the node.

If the AJIF LOD has skeletons, the reference of the first corresponding skin created (e.g., as described herein) for a skeleton may be used to define the "skin" property of the node. If there is no corresponding skin, the "skin" property may not be defined (e.g., the missing skeletons may be made available in the extension).

AJIF LOD controllers (e.g., if they exist) may be ignored (e.g., the feature may be made available in the extension).

In the first created node, a "MSFT_lod" extension may be added to the "extensions" property of the node. The "ids" property of the "MSFT_lod" extension may include the ids of the nodes created for an (e.g., each) lod, for example, from the node with the highest level of details to the lowest. An "MPEG_node_avatar" extension may be created with the "isAvatar" defined as True.

The "scenes" root property may be created, and its "nodes" property may include the id of the first created node with the highest LOD, e.g., where the "MSFT_lod" and "MPEG_node_avatar" extensions were created. The "scene" root property may be created and may reference the scene.

Encoding of AJIF LODs may be performed with extensions. For example, for an (e.g., each) AJIF Level Of Detail (LOD), a *LOD* may be created in the "lods" property of the "MPEG_avatar_lods" extension. Properties (e.g., all properties) present in the AJIF LOD may be copied to corresponding properties of the *LOD.*

Encoding may be performed with respect to AJIF Metadata. For example, properties (e.g., all properties) present in the AJIF metadata may be copied to the "MPEG_avatar_metadata" extension.

Examples of processing models are described.

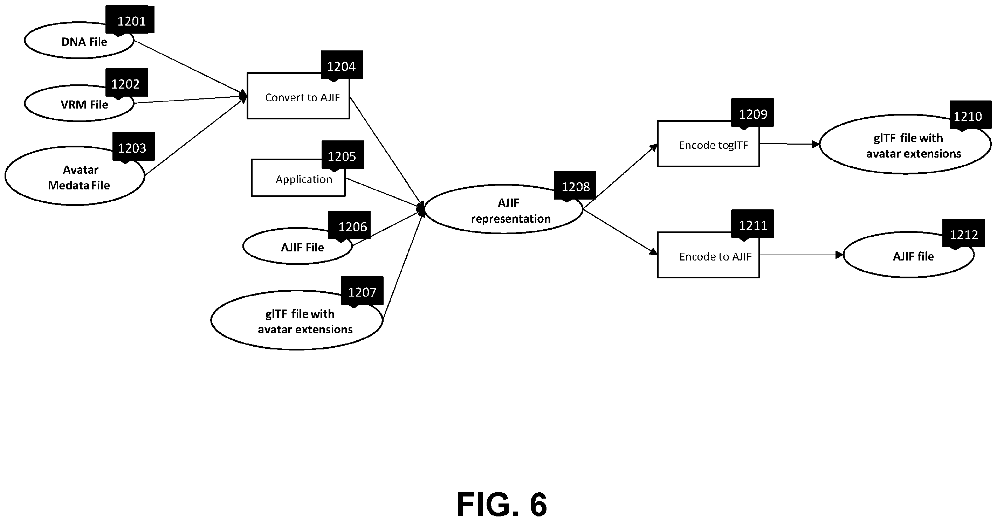

For example, a process may create an avatar glTF file. FIG. 6 shows an example of a process for encoding an avatar into a glTF file.

FIG. 6 illustrates an example of creating an avatar glTF file according to an embodiment.

As shown in FIG. 6, the glTF file may be created (e.g., using procedures described herein) based on an avatar represented in AJIF format (1208). The representation may not necessarily be a file. The representation, for example, may be stored into the memory of a computer or accessed through an API.

Avatar formats such as DNA (1201) or (1202) may be converted to AJIF (1204). Depending on the content of the avatar files, some features may be ignored, e.g., if the AJIF format does not support them. The AJIF support may vary.

Non-avatar formats may (e.g., also) be used to create AJIF, for example, using an Avatar Metadata Format (1203). One or more (e.g., most) existing scene description formats (e.g., obj or glTF) may be used together with an avatar metadata format to build an AJIF representation.

An application may (e.g., directly) create an AJIF representation (1205). The application may be, for example, a 3D asset creation software (e.g., Blender). An AJIF representation may (e.g., also) be (e.g., directly) obtained from an AJIF encoding (e.g., Avatar Json Interchange File Format) (1206), and/or the format described herein (e.g., glTF file with avatar extensions) (1207).

Once the AJIF representation is obtained (1208), the procedures described herein may be used to create the desired format (1209, 1210). A device (e.g., an encoder) may generate a first version of data (e.g., using a first data container) and/or store the data in the first data container. For example, the first data container may be a glTF container, associated with a root node. The device may generate a second version of data (e.g., using a second data container) and/or store the data in the second data container. For example, the first data container may be an AJIF container, associated with an extension node. The data may be mesh data, or other types (e.g., blendshapes, textures, skeletons, etc). In examples, both the first data container and the second data container are included in the same file (e.g., glTF file). A parser (e.g., a non-AJIF compatible parser) may parse the data in the first data container. A parser (e.g., an AJIF compatible parser) may parse the data in the second data container. In some examples, a parser (e.g., an AJIF compatible parser) may parse the data in the first data container and the data in the second data container. For example, a decoder may decode the data in the first data container and the data in the second data container in combination.

In examples, a device (e.g., an encoder) may determine whether to use a first data container or a second data container to include data associated with an extension (e.g., the first data container may be associated with a first data format, and the second data container may be associated with a second data format). The device may include the data associated with the extension in the first or second data container based on the determination. The device may indicate the first or second data container for including the data associated with the extension. For example, the device may determine a subset of extensions associated with an avatar representation. For example, the subset of extensions may include a level of details (LOD) extension. The device may determine whether to use a first data container or a second data container to contain mesh data associated with the LOD extension. For example, the first data container is associated with a first data format, and the second data container is associated with a second data format. The device may include the mesh data associated with the LOD extension in the first or second data container. The device may indicate the first or second data container for containing the mesh data associated with the LOD extension.

In examples, a mesh glTF property may be associated with the LOD extension and used to indicate that the first data container contains the mesh data associated with the LOD extension.

In examples, the first data container may be associated with a root node of the avatar representation, and the second data container may be associated with an extension node of the avatar representation. For example, the second data container may be configured for containing data of a greater level of complexity than the first data container.

Encoding may be performed using an encoding format (e.g., Avatar Json Interchange File Format) (1211, 1212), which format (e.g., in addition to the encoding format described herein) may be used to encode the same content.

A device (e.g., a decoder) may parse an extension and/or determine whether to obtain data associated with the extension from a first data container or a second data container (e.g., the first data container may be associated with a first data format, and the second data container may be associated with a second data format). The device may obtain the data associated with the extension and/or decode the data associated with the extension.

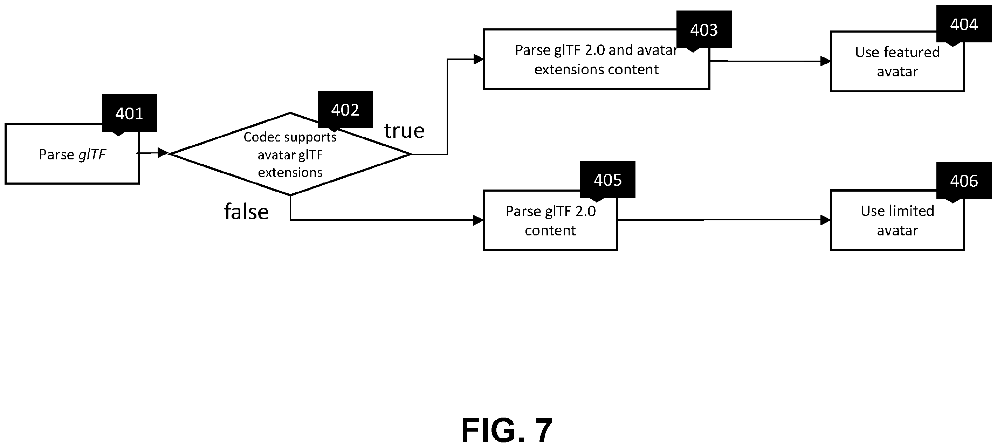

A process may load an avatar glTF file. FIG. 7 shows an example of how a glTF file (e.g., encoded as described herein) may be loaded, e.g., depending on application capabilities.

FIG. 7 illustrates an example of loading an avatar glTF file according to an embodiment.

As shown in FIG. 7, at 401, the process may occur when an application needs to load an avatar glTF file.

At 402, the application may have access to a glTF codec, which may or may not support the extensions (e.g., as described herein). The support capability may be indicated, for example, by a function of the codec API. The application may (e.g., also) not consider or may not be aware of the existence of the avatar glTF format. The application (e.g., in this case) may (e.g., always) use the codec as if it does not support the avatar format. A device (e.g., a decoder) may parse and/or decode the data in the second data container if the decoder identifies the data in the second data container. If the decoder does not identify the data in the second data container, and if the decoder identifies the data in the first data container, the decoder may parse and/or decode the data in the first data container. In examples, a decoder (e.g., an AJIF compatible decoder) may use the data in the first data container (e.g., if that's all it sees in the file). In some examples, the data in the second data container may be preferred, if available.

At 403, the codec may support the avatar format. The application may wish to use the codec. The extensions (e.g., as described herein) may be parsed (e.g., as described herein).

At 404, the application may use (e.g., all) the advanced avatar features.

At 405, the codec may not support the avatar format (e.g., a codec that fully supports glTF 2.0), or the application may not wish to use the codec. The extensions (e.g., as described herein) may be ignored.

At 406, the application may use the avatar, e.g., with limited features, and/or may need additional information.

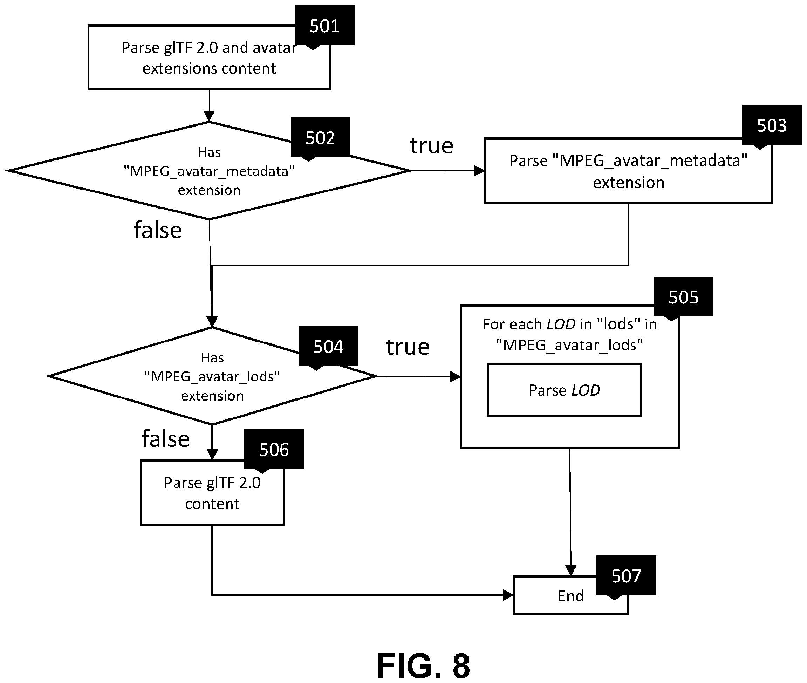

A process may parse a glTF file with avatar extensions. FIG. 8 shows an example of parsing a glTF file considering the extensions (e.g., as described herein).

FIG. 8 illustrates an example of parsing a glTF file with avatar extensions according to an embodiment. Parsing may occur at 501. A device (e.g., via a parser) may parse glTF2.0 and/or avatar extensions content at 501. For example, the device may determine that an avatar representation is associated with one or more extensions. In some examples, the device may parse a glTF 2.0 file associated with the avatar representation to determine that the avatar representation is associated with the one or more extensions.

As shown in FIG. 8, at 502, 503, the "MPEG_avatar_metadata" extension (e.g., if present) may be parsed. The parsing may include decoding (e.g., all) the properties of the *Metadata* structure (e.g., as described herein).

At 504, 505, an "MPEG_avatar_lods" extension (e.g., if present) may be parsed, for example, by parsing (e.g., all) items of the "lods" property of the extension (e.g., as described herein). For example, the device (e.g., via the parser) may parse an LOD extension based on the determination that the avatar representation is associated with the one or more extensions.

At 506, the (e.g., basic) glTF content may be parsed, for example, if there is no "MPEG_avatar_lods" extension.

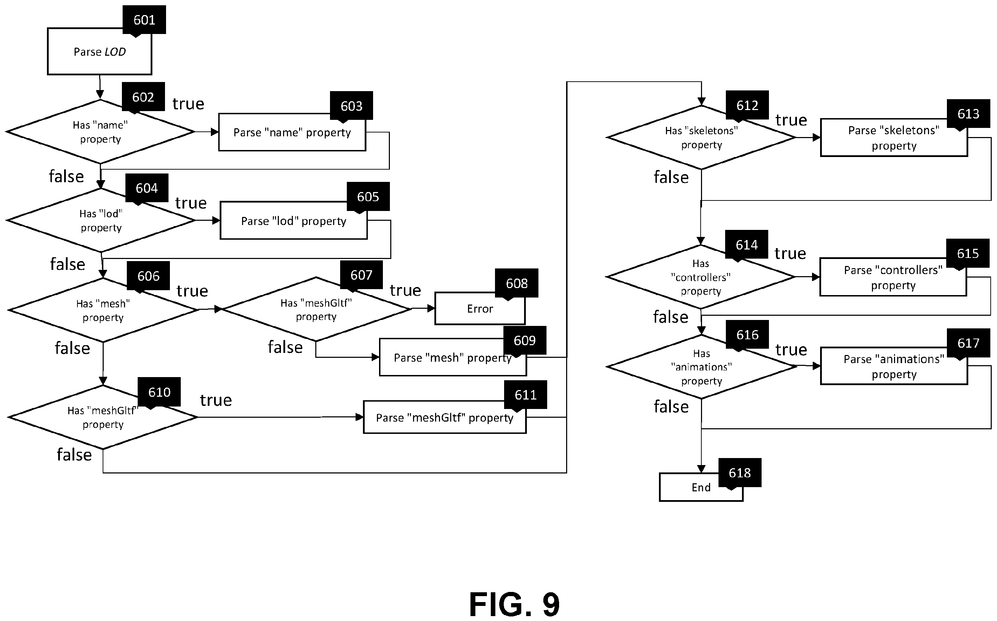

A process may parse a LOD in MPEG_avatar_lods. FIG. 9 shows an example of parsing of an item in the "lods" property of the "MPEG avatar_lods" extension. The example in FIG. 9 may be used for processing information in one or more examples as described herein (e.g., Table 29 and Table 30). In some examples, for a process that processes information in Table 30, a meshType may be used to determine the type of mesh being signaled.

A type indication may be used to indicate whether data associated with an extension is in a first data format or a second data format. In examples, a property type indication (e.g., mesh Type) may be used to indicate whether the mesh data associated with the LOD extension is in the first data format or the second data format. For example, if the value of the property type indication indicates the mesh data associated with the LOD extension is in the first data format, the first data container may be used to contain the mesh data associated with the LOD extension. If a value of the property type indication indicates the mesh data associated with the LOD extension is in the second data format, the second data container may be used to contain the mesh data associated with the LOD extension.

One or more examples herein may be described using a first data format and a second data format, which are used to illustrate the examples but not to limit the number of data formats. More than two data formats may be used in association with the examples. One or more examples herein may be described using a first data container and a second data container, which are used to illustrate the examples but not to limit the number of data containers. More than two data containers may be used in associated with the examples.

FIG. 9 illustrates an example of parsing a LOD in MPEG_avatar_lods according to an embodiment.

As shown in FIG. 9, at 601, parsing may occur (e.g., the parsing may occur each/every time a *LOD* is parsed (e.g., as described herein)).

At 602, 603, the "name" property may be parsed, e.g., if present.

At 604, 605, the "lod" property may be parsed, e.g., if present. Otherwise (e.g., if the "lod" property is not present), the value of "lod" may be zero (0).

The device may determine whether to obtain mesh data associated with the LOD extension from a first data container associated with a root node or a second data container associated with an extension node. At 606, 607, 608, 609, if the "mesh" property is present (606), the "meshGltf" property may not be present (607, 608). The "mesh" property may be parsed (609) and may reference a node in an "MPEG_avatar_nodes" extension (e.g., an existing node in an existing "MPEG_avatar_nodes" extension). In examples, based on the "mesh" property, the device may determine that the mesh data associated with the LOD extension is to be obtained from the second data container (e.g., a data container associated with an extension node).

At 606, 610, 611, the operation may occur (e.g., only) if there is no "mesh" property (606). If the "meshGltf" property is determined to be present (610), the "meshGltf" property may be parsed (611) and may reference a node (e.g., an existing node) in the "nodes" root property. In examples, based on the "meshGltf" property, the device may determine that the mesh data associated with the LOD extension is to be obtained from the first data container (e.g., a data container associated with a root node). In examples, based on a determination that a mesh glTF property is associated with the LOD extension, the device may obtain the mesh data associated with the LOD extension from the first data container. The device may determine that the mesh data associated with the LOD extension is in the first data format based on the determination that the mesh glTF property is associated with the LOD extension.

The first data container and the second data container may be associated with different data formats. For example, the first data container may be associated with a first data format, and the second data container may be associated with a second data format. In examples, the first data format may be glTF (e.g., glTF2.0), and the second data format may be a different format (e.g., AJIF) from glTF. In examples, the second data container may be configured for containing data of a greater level of complexity than the first data container. For example, the second data container may be configured to contain triangle-based mesh data and quad-based mesh data, and the first data container may be configured to contain the triangle-based mesh data (e.g., without the quad-based mesh data). In some examples, the second data container may include at least one data that is the same as data in the first data container.

At 612, 613, the "skeletons" property may be parsed, e.g., if present. A (e.g., each) value in the "skeletons" property may reference a skeleton in an "MPEG_avatar_skeletons" extension (e.g., an existing skeleton in an existing "MPEG_avatar_skeletons" extension).

At 614, 615, the "controllers" property may be parsed, e.g., if present. A (e.g., each) value in the "controllers " property may reference a controller in an "MPEG_avatar_controllers" extension (e.g., an existing controller in an existing "MPEG_avatar_controllers" extension).

At 616, 617: The "animations" property may be parsed, e.g., if present. A (e.g., each) value in the "animations " property may reference an animation (e.g., an existing animation) in the "animations" root property.

At 618, parsing may end. The device may obtain the mesh data associated with the LOD extension and/or decode at least the mesh data associated with the LOD extension to generate the avatar representation.

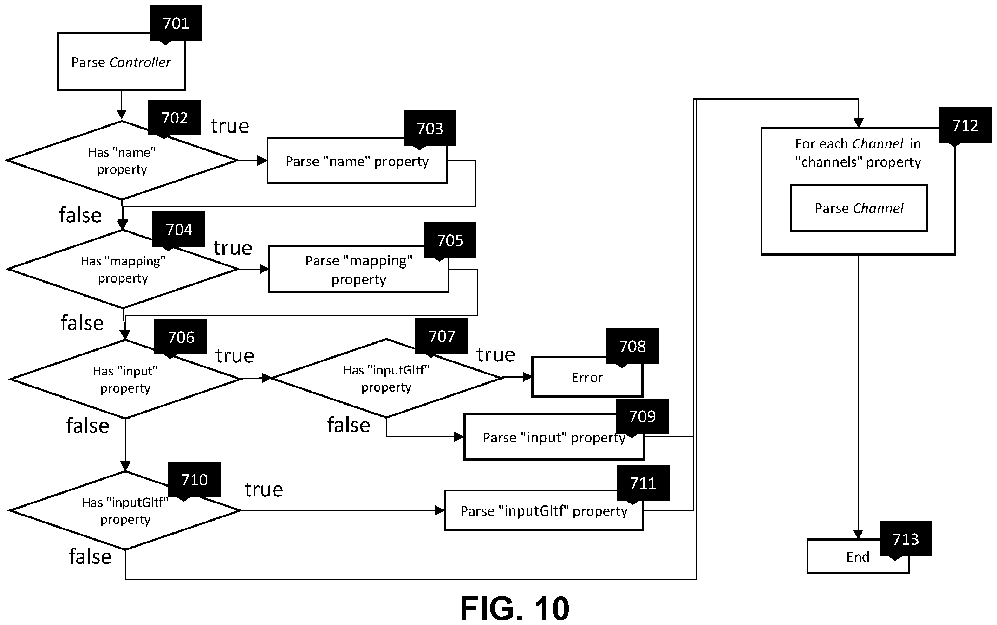

A process may parse a Controller in MPEG_avatar_controllers. FIG. 10 shows an example of parsing an item in the "controllers" property of the "MPEG_avatar_controllers" extension.

FIG. 10 illustrates an example of parsing a Controller in MPEG_avatar_controllers according to an embodiment.

As shown in FIG. 10, at 701, the parsing may occur when (e.g., each/every time) a *Controller* is parsed (e.g., as described herein).

At 702, 703, the "name" property may be parsed, e.g., if present.

At 704, 705, the "mapping" property may be parsed, e.g., if present.

At 706, 707, 708, 709, if the "input" property is present (706), the "inputGltf" property may not be present (707, 708). The "input" property may be parsed (709) and may reference a data in an "MPEG_avatar_rawdata" extension (e.g., an existing data in an existing "MPEG_avatar_rawdata" extension).

At 706, 710, 711, the operation may occur (e.g., only) if there is no "input" property (706). If the "inputGltf" property is determined to be present (710), the "inputGltf" property may be parsed (711) and may reference an accessor (e.g., an existing accessor) in the "accessors" root property.

At 712, an (e.g., each) item of the "channels" property may be parsed (e.g., as described herein).

At 713. Parsing may end.

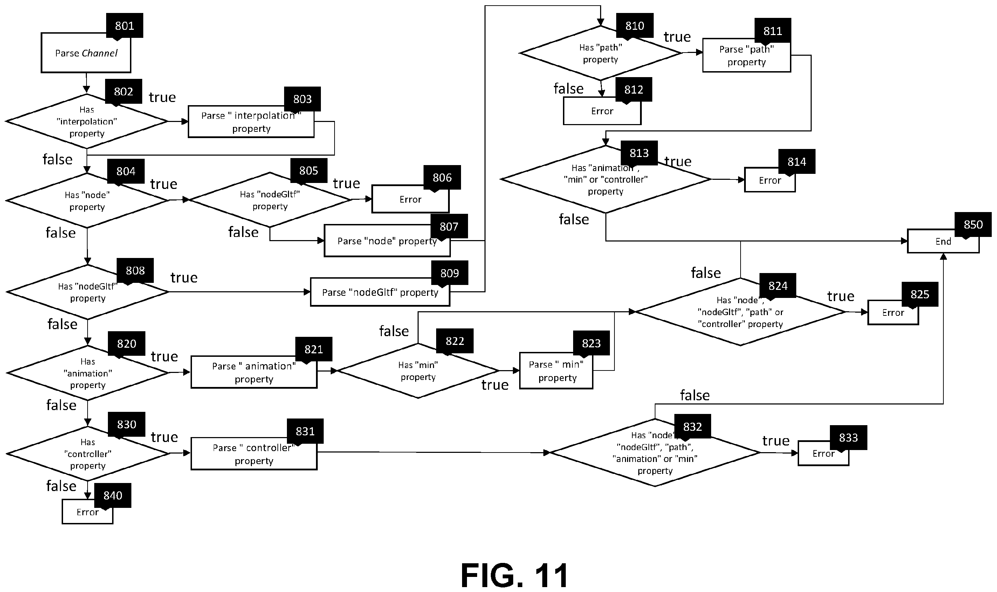

A process may parse a Channel in a Controller of MPEG_avatar_controllers. FIG. 11 shows an example of parsing an item in the "channels" property in a controller of the "MPEG_avatar_controllers" extension.

FIG. 11 illustrates an example of parsing a Channel in a Controller of MPEG_avatar_controllers according to an embodiment.

As shown in FIG. 11, at 801, the parsing may occur when (e.g., each/every time) a *Controller* is parsed (e.g., as described herein).

At 802, 803, the "interpolation" property may be parsed, e.g., if present.

At 804, 805, 806, 807, if the "node" property is present (804), the "nodeGltf" property may not be present (805, 806). The "node" property may be parsed (807) and may reference a node in an "MPEG_avatar_nodes" extension (e.g., an existing node in an existing "MPEG_avatar_nodes" extension).

At 804, 808, 809, the operation may (e.g., only) occur if there is no "node" property (804). If the "nodeGltf" property is present (808), the "nodeGltf" property may be parsed (809) and may reference a node (e.g., an existing node) in the "nodes" root property.

At 810, 811, 812, the "path" property may be parsed (e.g., may produce an error if not present). The "path" property may reference an object (e.g., an existing object) in the node referenced by "node" or "nodeGltf."

At 813, 814, there may be an error, for example, if one or more of the following properties are present: "animation," "min," and/or "controller."

At 820, 821, 822, 823, if the "animation" property is determined to be present (820), the "animation" property may be parsed (821). If the "min" property is determined to be present (822), the "min" property may be parsed (823).

At 824, 825, there may be an error, for example, if one or more of the following properties are present: "node," "nodeGltf," "path," and/or "controller."

At 830, 831, if the "controller" is present (830), the "controller" may be parsed (831).

At 832, 833, there may be an error, for example, if one or more of the following properties are present: "node," "nodeGltf," "path," "animation," and/or "min."

At 840, there may be an error, for example, if there are not any valid properties.

At 850, parsing may end.

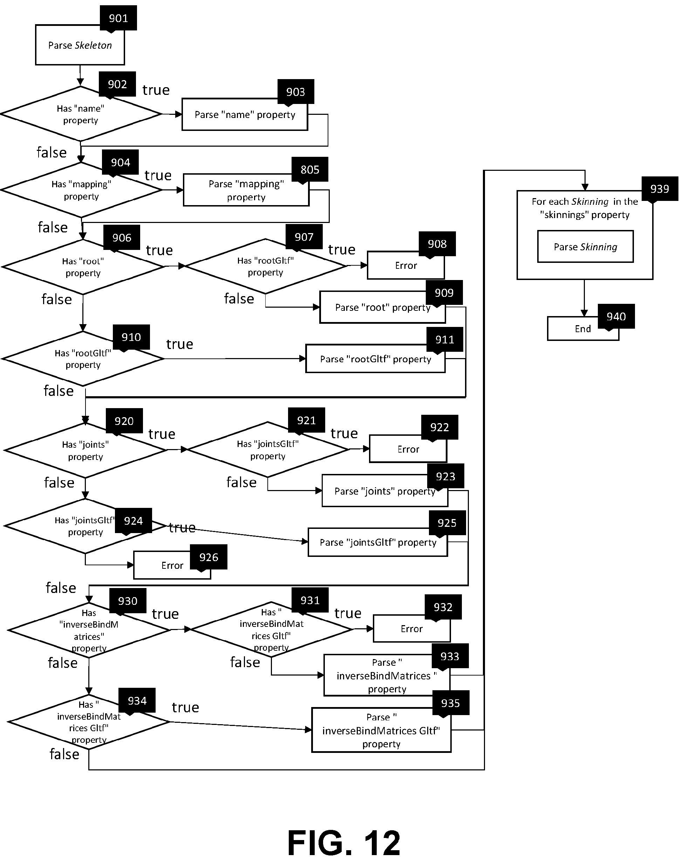

A process may parse a Skeleton in MPEG_avatar_skeletons. FIG. 12 shows an example of parsing an item in the "skeletons" property of the "MPEG_avatar_skeletons" extension.

FIG. 12 illustrates an example of parsing a Skeleton in MPEG_avatar_skeletons according to an embodiment.

As shown in FIG. 12, at 901, the parsing may occur when (e.g., each/every time) a *Skeleton* is parsed (e.g., as described herein).

At 902, 903, the "name" property may be parsed, e.g., if present.

At 904, 905, the "mapping" property may be parsed, e.g., if present.

At 906, 909, 908, 909, if the "root" property is present (906), the "rootGItY' property may not be present (909, 908). The "root" property may be parsed (909) and may reference a node in an "MPEG_avatar_nodes" extension (e.g., an existing node in an existing "MPEG_avatar_nodes" extension).

At 906, 910, 911, the operation may occur (e.g., only) if there is no "root" property (906). If the "rootGltf' property is determined to be present (910), the "rootGItY' property may be parsed (911) and may reference a node (e.g., an existing node) in the "nodes" root property.

At 920, 921, 922, 923, if the "joints" property is present (920), the "jointsGItY' property may not be present (921, 922). The "joints" property may be parsed (923) and each value of the "joints" property may reference a node in an "MPEG_avatar_nodes" extension (e.g., an existing node in an existing "MPEG_avatar_nodes" extension).

At 920, 924, 925, the operation may occur (e.g., only) if there is no "joints" property (920). If the "jointsGltf' property is present (924), the "jointsGltf' property may be parsed (925) and each value of the "jointsGltf' property may reference a node (e.g., an existing node) in the "nodes" root property.

At 926, there may be an error if the "joints" property and "jointsGltf' property are not present.

At 930, 931, 932, 933, if the "inverseBindMatrices" property is present (930), the "inverseBindMatricesGItY' property may not be present (931, 932). The "inverseBindMatrices" property may be parsed (933) and may reference a data in an "MPEG_avatar_rawdata" extension (e.g., an existing data in an existing "MPEG_avatar_rawdata" extension).

At 930, 934, 935, the operation may occur (e.g., only) if there is no "inverseBindMatrices" property

(930). If the "inverseBindMatricesGltf' property is present (934), the "inverseBindMatricesGltf' property may be parsed (935) and may reference an accessor (e.g., an existing accessor) in the "accessors" root property.

At 939, an (e.g., each) item of the "skinnings" property may be parsed (e.g., as described herein).

At 940, parsing may end.

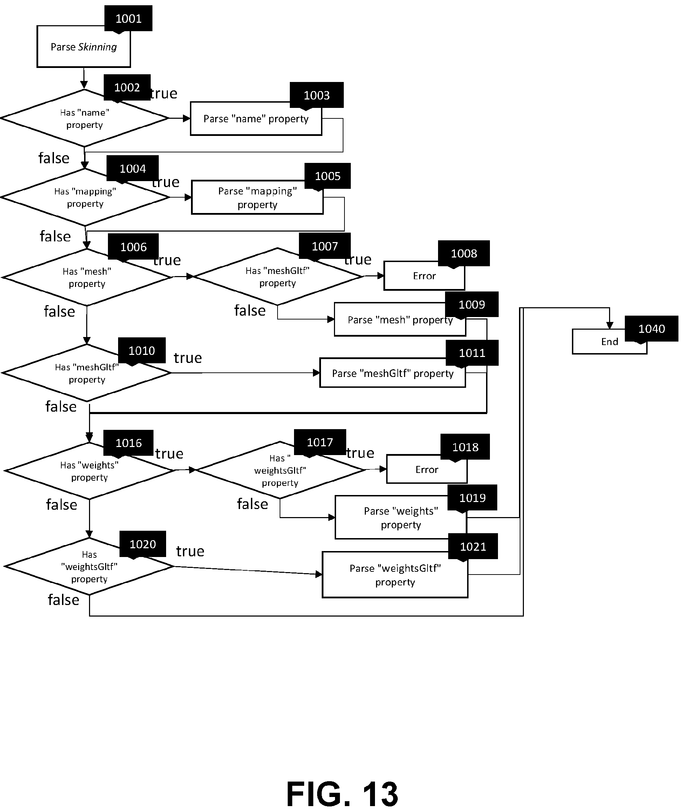

A process may parse a Skinning in a Skeleton of MPEG_avatar_skeletons. FIG. 13 shows an example of parsing an item in the "skinnings" property in a skeleton of the "MPEG_avatar_skeletons" extension.

FIG. 13 illustrates an example of parsing a Skinning in a Skeleton of MPEG_avatar_skeletons according to an embodiment.

As shown in FIG. 13, at 1001, the parsing may occur when (e.g., each/every time) a *Skinning* is parsed (e.g., as described herein).

At 1002, 1003, the "name" property may be parsed, e.g., if present.

At 1004, 1005, the "mapping" property may be parsed, e.g., if present.

At 1006, 1007, 1008, 1009, if the "mesh" property is present (1006), the "meshGltf" property may not be present (1007, 1008). The "mesh" property may be parsed (1009) and may reference a node in an "MPEG_avatar_nodes" extension (e.g., an existing node in an existing "MPEG_avatar_nodes" extension).

At 1006, 1010, 1011, the operation may occur (e.g., only) if there is no "mesh" property (1006). If the "meshGltf" property is present (1010), the "meshGltf" property may be parsed (1011) and may reference a node (e.g., an existing node) in the "nodes" root property.

At 1016, 1017, 1018, 1019, if the "weights" property is present (1016), the "weightsGltY' property may "MPEG_avatar_rawdata" extension (e.g., an existing data in an existing "MPEG_avatar_rawdata" extension).

At 1016, 1020, 1021, the operation may occur (e.g., only) if there is no "weights" property (1016). If the "weightsGltf" property is present (1020), the "weightsGltf" property may be parsed (1021) and may reference an accessor (e.g., an existing accessor) in the "accessors" root property.

At 1040, parsing may end.

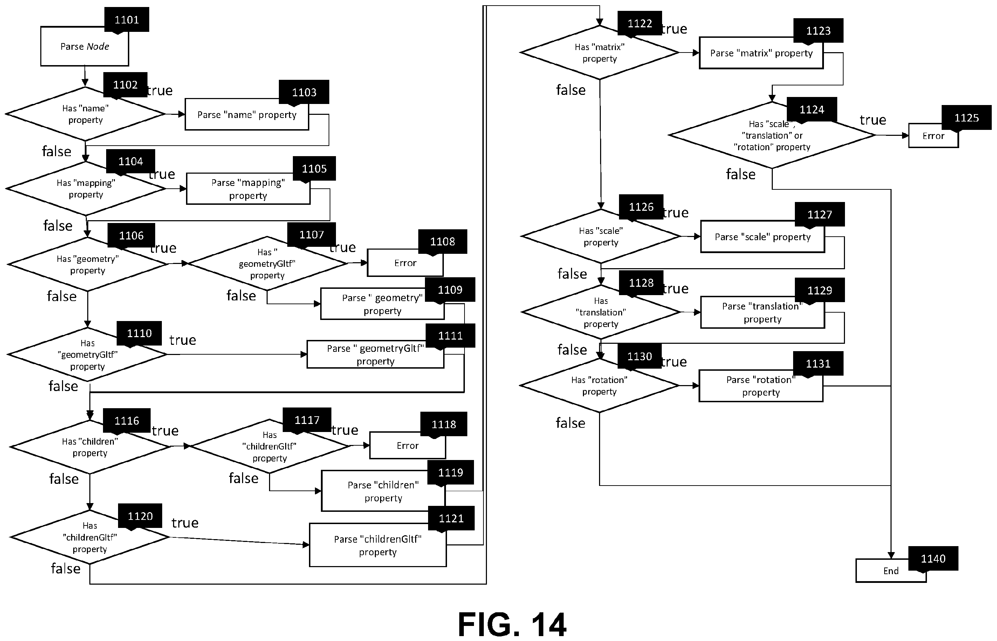

A process may parse a Node in MPEG_avatar_nodes. FIG. 14 shows an example of parsing of an item in the "nodes" property of the "MPEG avatar_nodes" extension.

FIG. 14 illustrates an example of parsing a Node in MPEG_avatar_nodes according to an embodiment.

As shown in FIG. 14, at 1101, the parsing may occur when (e.g., each/every time) a *Node* is parsed (e.g., as described herein).

At 1102, 1103, the "name" property may be parsed, e.g., if present.

At 1104, 1105, the "mapping" property may be parsed, e.g., if present.

At 1106, 1107, 1108, 1109, if the "geometry" property is present (1106), the "geometryGltf" property may not be present (1107, 1108). The "geometry" property may be parsed (1109) and may reference a geometry in an "MPEG avatar_geometries" extension (e.g., an existing geometry in an existing "MPEG avatar_geometries" extension).

At 1106, 1110, 1111, the operation may occur (e.g., only) if there is no "geometry" property (1106). If the "geometryGltf" property is present (1110), the "geometryGltf" property may be parsed (1111) and may reference a mesh (e.g., an existing mesh) in the "meshes" root property.

At 1116, 1117, 1118, 1119, if the "children" property is present (1116), the "childrenGltf' property may not be present (1117, 1118). The "children" property may be parsed (1119) and (e.g., all) values of "children" may reference a node (e.g., an existing node) in the "MPEG avatar_nodes" extension.

At 1116, 1120, 1121, the operation may occur (e.g., only) if there is no "children" property (1116). If the "childrenGltf" property is present (1120), the "childrenGltY' property may be parsed (1121) and (e.g., all) values of "childrenGltf" may reference a node (e.g., an existing node) in the "nodes" root property.

At 1122, 1123, 1124, 1125, the "matrix" property (e.g., if present) may be parsed. If the "matrix" property is present, the "scale," "translation," and "rotation" properties may not be present.

At 1126, 1127, the "scale" property may be parsed, e.g., if present.

At 1128, 1129, the "translation" property may be parsed, e.g., if present.

At 1130, 1131, the "rotation" property may be parsed, e.g., if present.

At 1140, parsing may end.

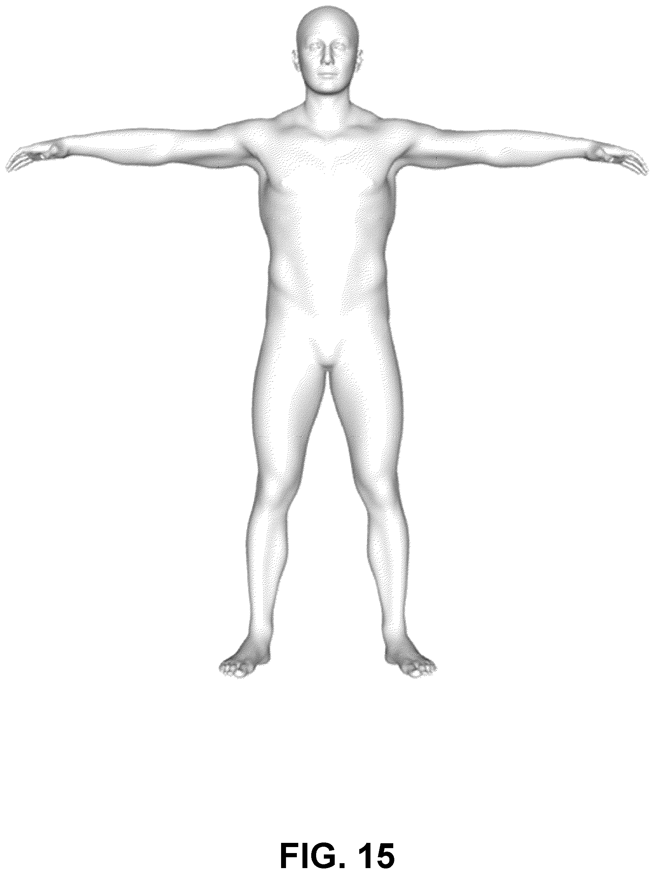

An example of an AJIF schema is described herein. FIG. 15 shows an example of a full body mesh.

FIG. 15 illustrates an example of an avatar mesh according to an embodiment.

As shown in FIG. 15, a mesh may be, for example, a mesh of an MPEG Morgan reference avatar 2023 at a high (e.g., the highest) resolution. The mesh may be made (e.g., mainly made) of quads, e.g., except for the iris of the eyes, which may be made with triangles. Table 34 shows an example of the body parts that may be considered.

Table 34 - Example of original Morgan parts with quads and triangles

| Name | Vertex count | Face count | Face range |
|---|---|---|---|
| full_body | 53698 | 53496 | [0, 53495] |
| full_body/upper_body | 46340 | 46112 | [0, 46111] |
| full_body/upper_body/head | 36584 | 36362 | [0, 36361] |
| full_body/upper_body/head/face | 12199 | 12174 | [0, 12173] |
| full_body/upper_body/head/jaw | 21547 | 21420 | [12174, 33593] |
| full_body/upper_body/head/eye_left | 1419 | 1384 | [33594, 34977] |
| full_body/upper_body/head/eye_right | 1419 | 1384 | [34978, 36361] |

(continued)

| Name | Vertex count | Face count | Face range |
|------|--------------|------------|------------|
| full_body/upper_body/thorax | 1876 | 1792 | [36362, 38153] |
| full_body/upper_body/arm_left | 3585 | 3568 | [38154, 41721] |
| full_body/upper_body/arm_right | 3585 | 3568 | [41722, 45289] |
| full_body/upper_body/abdomen | 882 | 822 | [45290, 46111] |
| full_body/lower_body | 7418 | 7384 | [46112, 53495] |
| full_body/lower_body/pelvis | 1096 | 1034 | [46112, 47145] |
| full_body/lower_body/leg_left | 3191 | 3175 | [47146, 50320] |
| full_body/lower_body/leg_right | 3191 | 3175 | [50321, 53495] |

The partition may be a subset of the complete MORGAN body parts.

A (e.g., each) body part may use a fixed range of faces. For example, "full_body" may use all the faces, and "full_body/upper_body/thorax" may use the faces with indices from 36362 to 38153.

A secondary mesh may be created, for example, because glTF supports (e.g., only) triangles. The secondary mesh may be created from the original mesh, for example, by converting the original mesh into triangles, which may lead to the following parts shown by example in Table 35.

Table 35 - Example of Morgan parts with only triangles

| Name | Vertex count | Face count | Face range |
|------|--------------|------------|------------|
| full_body | 53698 | 106952 | [0, 106951] |
| full_body/upper_body | 46340 | 92184 | [0, 92183] |
| full_body/upper_body/head | 36584 | 72684 | [0, 72683] |
| full_body/upper_body/head/face | 12199 | 24348 | [0, 24347] |
| full_body/upper_body/head/jaw | 21547 | 42840 | [24348, 67187] |
| full_body/upper_body/head/eye_left | 1419 | 2748 | [67188, 69935] |
| full_body/upper_body/head/eye_right | 1419 | 2748 | [69936, 72683] |
| full_body/upper_body/thorax | 1876 | 3584 | [72684, 76267] |
| full_body/upper_body/arm_left | 3585 | 7136 | [76268, 83403] |
| full_body/upper_body/arm_right | 3585 | 7136 | [83404, 90539] |
| full_body/upper_body/abdomen | 882 | 1644 | [90540, 92183] |
| full_body/lower_body | 7418 | 14768 | [92184, 106951] |
| full_body/lower_body/pelvis | 1096 | 2068 | [92184, 94251] |
| full_body/lower_body/leg_left | 3191 | 6350 | [94252, 100601] |
| full_body/lower_body/leg_right | 3191 | 6350 | [100602, 106951] |

The triangularization process may not change the vertices. The triangularization process may (e.g., only) turn quad faces into multiple (e.g., two) triangles. The triangularization process may leave unchanged the triangles (e.g., the existing triangles). One or more of the parts (e.g., all the parts) may have a multiple of (e.g., twice) the number of faces, e.g., except for the eyes, which may have less than the twice the number of faces, for example, since there may be triangles in the original mesh for the eyes.

The mesh (e.g., secondary mesh) may be saved as a glTF file with the extensions (e.g., as described herein) as shown by example in Table 36, which shows (e.g., only) the main JSON part.

Table 36 – Example of a secondary mesh saved as a glTF file with extensions

```
{
  "asset": { "generator": "Interdigital R&D France, Video Lab, MetaVideo, Interactive Media, Immersive
teleprescence", "version": "2.0" },
      "extensionsUsed":      ["MPEG_node_avatar",     "MSFT_lod",     "MPEG_avatar_rawdata",
"MPEG_avatar_geometries", "MPEG_avatar_nodes", "MPEG_avatar_lods"],
  "buffers": [
    { "byteLength": 1927800, "name": "buffers", "uri": "morgan_ajif_buffers.bin" }
  ],
  "bufferViews": [
    { "buffer": 0, "byteLength": 644376, "byteOffset": 0, "name": "vertices", "target": 34962 },
    { "buffer": 0, "byteLength": 292176, "byteOffset": 644376, "name": "face_faces", "target": 34963 },
    { "buffer": 0, "byteLength": 514080, "byteOffset": 936552, "name": "jaw_faces", "target": 34963 },
    { "buffer": 0, "byteLength": 32976, "byteOffset": 1450632, "name": "eye_left_faces", "target": 34963
},
    { "buffer": 0, "byteLength": 32976, "byteOffset": 1483608, "name": "eye_right_faces", "target": 34963
},
    { "buffer": 0, "byteLength": 43008, "byteOffset": 1516584, "name": "thorax_faces", "target": 34963 },
    { "buffer": 0, "byteLength": 85632, "byteOffset": 1559592, "name": "arm_left_faces", "target": 34963
},
    { "buffer": 0, "byteLength": 85632, "byteOffset": 1645224, "name": "arm_right_faces", "target": 34963
},
    { "buffer": 0, "byteLength": 19728, "byteOffset": 1730856, "name": "abdomen_faces", "target": 34963
```

```
        },
          { "buffer": 0, "byteLength": 24816, "byteOffset": 1750584, "name": "pelvis_faces", "target": 34963 },
          { "buffer": 0, "byteLength": 76200, "byteOffset": 1775400, "name": "leg_left_faces", "target": 34963
        },
          { "buffer": 0, "byteLength": 76200, "byteOffset": 1851600, "name": "leg_right_faces", "target": 34963
        }
      ],
      "accessors": [
        {
          "bufferView": 0,
          "byteOffset": 0,
          "componentType": 5126,
          "count": 53698,
          "max": [0.716973, 0.697556, 0.128898],
          "min": [-0.716973, -0.79444, -0.128898],
          "name": "vertices",
          "type": "VEC3"
        },
        {
          "bufferView": 1,
          "byteOffset": 0,
          "componentType": 5125,
          "count": 73044,
          "max": [12198],
          "min": [0],
          "name": "face_faces",
          "type": "SCALAR"
        },
        {
          "bufferView": 2,
          "byteOffset": 0,
          "componentType": 5125,
          "count": 128520,
```

```
      "max": [33745],
      "min": [12199],
      "name": "jaw_faces",
      "type": "SCALAR"
    },
    {
      "bufferView": 3,
      "byteOffset": 0,
      "componentType": 5125,
      "count": 8244,
      "max": [35164],
      "min": [33746],
      "name": "eye_left_faces",
      "type": "SCALAR"
    },
    {
      "bufferView": 4,
      "byteOffset": 0,
      "componentType": 5125,
      "count": 8244,
      "max": [36583],
      "min": [35165],
      "name": "eye_right_faces",
      "type": "SCALAR"
    },
    {
      "bufferView": 5,
      "byteOffset": 0,
      "componentType": 5125,
      "count": 10752,
      "max": [38411],
      "min": [11360],
      "name": "thorax_faces",
```

```
        "type": "SCALAR"
      },
      {
        "bufferView": 6,
        "byteOffset": 0,
        "componentType": 5125,
        "count": 21408,
        "max": [41964],
        "min": [37660],
        "name": "arm_left_faces",
        "type": "SCALAR"
      },
      {
        "bufferView": 7,
        "byteOffset": 0,
        "componentType": 5125,
        "count": 21408,
        "max": [45517],
        "min": [37632],
        "name": "arm_right_faces",
        "type": "SCALAR"
      },
      {
        "bufferView": 8,
        "byteOffset": 0,
        "componentType": 5125,
        "count": 4932,
        "max": [46339],
        "min": [37474],
        "name": "abdomen_faces",
        "type": "SCALAR"
      },
      {
```

```
      "bufferView": 9,

      "byteOffset": 0,

      "componentType": 5125,

      "count": 6204,

      "max": [47375],

      "min": [45911],

      "name": "pelvis_faces",

      "type": "SCALAR"

    },

    {

      "bufferView": 10,

      "byteOffset": 0,

      "componentType": 5125,

      "count": 19050,

      "max": [50536],

      "min": [46563],

      "name": "leg_left_faces",

      "type": "SCALAR"

    },

    {

      "bufferView": 11,

      "byteOffset": 0,

      "componentType": 5125,

      "count": 19050,

      "max": [53697],

      "min": [46828],

      "name": "leg_right_faces",

      "type": "SCALAR"

    }

  ],

  "meshes": [

    {

      "name": "face",
```

```
  "primitives": [
    {
      "attributes": { "POSITION": 0 },
      "indices": 1
    }
  ]
},
{
  "name": "jaw",
  "primitives": [
    {
      "attributes": { "POSITION": 0 },
      "indices": 2
    }
  ]
},
{
  "name": "eye_left",
  "primitives": [
    {
      "attributes": { "POSITION": 0 },
      "indices": 3
    }
  ]
},
{
  "name": "eye_right",
  "primitives": [
    {
      "attributes": { "POSITION": 0 },
      "indices": 4
    }
  ]
```

```
    },
    {
      "name": "thorax",
      "primitives": [
        {
          "attributes": { "POSITION": 0 },
          "indices": 5
        }
      ]
    },
    {
      "name": "arm_left",
      "primitives": [
        {
          "attributes": { "POSITION": 0 },
          "indices": 6
        }
      ]
    },
    {
      "name": "arm_right",
      "primitives": [
        {
          "attributes": { "POSITION": 0 },
          "indices": 7
        }
      ]
    },
    {
      "name": "abdomen",
      "primitives": [
        {
          "attributes": { "POSITION": 0 },
```

```
        "indices": 8
      }
    ]
  },
  {
    "name": "pelvis",
    "primitives": [
      {
        "attributes": { "POSITION": 0 },
        "indices": 9
      }
    ]
  },
  {
    "name": "leg_left",
    "primitives": [
      {
        "attributes": { "POSITION": 0 },
        "indices": 10
      }
    ]
  },
  {
    "name": "leg_right",
    "primitives": [
      {
        "attributes": { "POSITION": 0 },
        "indices": 11
      }
    ]
  }
],
"nodes": [
```

```
{
  "children": [1, 11],
  "name": "full_body"
},
{
  "children": [2, 7, 8, 9, 10],
  "name": "upper_body"
},
{
  "children": [3, 4, 5, 6],
  "name": "head"
},
{ "mesh": 0, "name": "face" },
{ "mesh": 1, "name": "jaw" },
{ "mesh": 2, "name": "eye_left" },
{ "mesh": 3, "name": "eye_right" },
{ "mesh": 4, "name": "thorax" },
{ "mesh": 5, "name": "arm_left" },
{ "mesh": 6, "name": "arm_right" },
{ "mesh": 7, "name": "abdomen" },
{
  "children": [12, 13, 14],
  "name": "lower_body"
},
{ "mesh": 8, "name": "pelvis" },
{ "mesh": 9, "name": "leg_left" },
{ "mesh": 10, "name": "leg_right" },
{
  "children": [0],
  "extensions": {
    "MPEG_node_avatar": {
      "isAvatar": true,
      "mappings": [
```

```
        { "node": 0, "path": "full_body" },
        { "node": 1, "path": "full_body/upper_body" },
        { "node": 2, "path": "full_body/upper_body/head" },
        { "node": 3, "path": "full_body/upper_body/head/face" },
        { "node": 4, "path": "full_body/upper_body/head/jaw" },
        { "node": 5, "path": "full_body/upper_body/head/eye_left" },
        { "node": 6, "path": "full_body/upper_body/head/eye_right" },
        { "node": 7, "path": "full_body/upper_body/thorax" },
        { "node": 8, "path": "full_body/upper_body/arm_left" },
        { "node": 9, "path": "full_body/upper_body/arm_right" },
        { "node": 10, "path": "full_body/upper_body/abdomen" },
        { "node": 11, "path": "full_body/lower_body" },
        { "node": 12, "path": "full_body/lower_body/pelvis" },
        { "node": 13, "path": "full_body/lower_body/leg_left" },
        { "node": 14, "path": "full_body/lower_body/leg_right" }
      ],
      "type": "urn:mpeg:sd:2023:avatar"
    },
    "MSFT_lod": {
      "ids": [0]
    }
  },
  "name": "morgan"
 }
],
"scenes": [
 {
   "nodes": [15]
 }
],
"scene": 0,
"extensions": {
  "MPEG_avatar_rawdata": {
```

```
    "data": [
        { "name": "face", "type": "tuples", "uri": "morgan_ajif_data.bin", "offset": 0, "byteLength": 60870,
"dtype": "u32", "itype": "u8" },
        { "name": "jaw", "type": "tuples", "uri": "morgan_ajif_data.bin", "offset": 60870, "byteLength":
107100, "dtype": "u32", "itype": "u8" },
        { "name": "eye_left", "type": "tuples", "uri": "morgan_ajif_data.bin", "offset": 167970, "byteLength":
6900, "dtype": "u32", "itype": "u8" },
        { "name": "eye_right", "type": "tuples", "uri": "morgan_ajif_data.bin", "offset": 174870, "byteLength":
6900, "dtype": "u32", "itype": "u8" },
        { "name": "thorax", "type": "tuples", "uri": "morgan_ajif_data.bin", "offset": 181770, "byteLength":
8960, "dtype": "u32", "itype": "u8" },
        { "name": "arm_left", "type": "tuples", "uri": "morgan_ajif_data.bin", "offset": 190730, "byteLength":
17840, "dtype": "u32", "itype": "u8" },
        { "name": "arm_right", "type": "tuples", "uri": "morgan_ajif_data.bin", "offset": 208570,
"byteLength": 17840, "dtype": "u32", "itype": "u8" },
        { "name": "abdomen", "type": "tuples", "uri": "morgan_ajif_data.bin", "offset": 226410,
"byteLength": 4110, "dtype": "u32", "itype": "u8" },
        { "name": "pelvis", "type": "tuples", "uri": "morgan_ajif_data.bin", "offset": 230520, "byteLength":
5170, "dtype": "u32", "itype": "u8" },
        { "name": "leg_left", "type": "tuples", "uri": "morgan_ajif_data.bin", "offset": 235690, "byteLength":
15875, "dtype": "u32", "itype": "u8" },
        { "name": "leg_right", "type": "tuples", "uri": "morgan_ajif_data.bin", "offset": 251565, "byteLength":
15875, "dtype": "u32", "itype": "u8" }
    ]
},
"MPEG_avatar_geometries": {
    "geometries": [
        {
            "name": "face",
            "verticesGltf": 0,
            "faces": { "vertices": 0 }
        },
        {
```

```
          "name": "jaw",
          "verticesGltf": 0,
          "faces": { "vertices": 1 }
        },
        {
          "name": "eye_left",
          "verticesGltf": 0,
          "faces": { "vertices": 2 }
        },
        {
          "name": "eye_right",
          "verticesGltf": 0,
          "faces": { "vertices": 3 }
        },
        {
          "name": "thorax",
          "verticesGltf": 0,
          "faces": { "vertices": 4 }
        },
        {
          "name": "arm_left",
          "verticesGltf": 0,
          "faces": { "vertices": 5 }
        },
        {
          "name": "arm_right",
          "verticesGltf": 0,
          "faces": { "vertices": 6 }
        },
        {
          "name": "abdomen",
          "verticesGltf": 0,
          "faces": { "vertices": 7 }
```

```
        },
        {
          "name": "pelvis",
          "verticesGltf": 0,
          "faces": { "vertices": 8 }
        },
        {
          "name": "leg_left",
          "verticesGltf": 0,
          "faces": { "vertices": 9 }
        },
        {
          "name": "leg_right",
          "verticesGltf": 0,
          "faces": { "vertices": 10 }
        }
      ]
    },
    "MPEG_avatar_nodes": {
      "nodes": [
        {
          "name": "full_body",
          "mapping": "full_body",
          "children": [1, 11],
          "childrenGltf": [1, 11]
        },
        {
          "name": "upper_body",
          "mapping": "full_body/upper_body",
          "children": [2, 7, 8, 9, 10],
          "childrenGltf": [2, 7, 8, 9, 10]
        },
        {
```

```
      "name": "head",
      "mapping": "full_body/upper_body/head",
      "children": [3, 4, 5, 6],
      "childrenGltf": [3, 4, 5, 6]
    },
    { "name": "face", "mapping": "full_body/upper_body/head/face", "geometry": 0, "geometryGltf": 0
},
    { "name": "jaw", "mapping": "full_body/upper_body/head/jaw", "geometry": 1, "geometryGltf": 1 },
        { "name": "eye_left", "mapping": "full_body/upper_body/head/eye_left", "geometry": 2,
"geometryGltf": 2 },
        { "name": "eye_right", "mapping": "full_body/upper_body/head/eye_right", "geometry": 3,
"geometryGltf": 3 },
    { "name": "thorax", "mapping": "full_body/upper_body/thorax", "geometry": 4, "geometryGltf": 4 },
    { "name": "arm_left", "mapping": "full_body/upper_body/arm_left", "geometry": 5, "geometryGltf":
5 },
        { "name": "arm_right", "mapping": "full_body/upper_body/arm_right", "geometry": 6,
"geometryGltf": 6 },
        { "name": "abdomen", "mapping": "full_body/upper_body/abdomen", "geometry": 7,
"geometryGltf": 7 },
    {
      "name": "lower_body",
      "mapping": "full_body/lower_body",
      "children": [12, 13, 14],
      "childrenGltf": [12, 13, 14]
    },
    { "name": "pelvis", "mapping": "full_body/lower_body/pelvis", "geometry": 8, "geometryGltf": 8 },
    { "name": "leg_left", "mapping": "full_body/lower_body/leg_left", "geometry": 9, "geometryGltf": 9
},
    { "name": "leg_right", "mapping": "full_body/lower_body/leg_right", "geometry": 10, "geometryGltf":
10 }
    ]
  },
  "MPEG_avatar_lods": {
```

```
    "lods": { "name": "hd", "lod": 0, "mesh": 0, "meshGltf": 15 }

      }

   }

}
```

Parsing may be performed by a non-compatible glTF parser. A validation step may be successful with a non-compatible glTF parser, for example, because (e.g., all) of the extensions used in the file may be declared in the "extensionsUsed" root property. An extension for glTF 2.0 may be present but ignored, for example, if declared in in the "extensionsUsed" root property.

Parsing (e.g., by a non-compatible glTF parser) may run successfully, for example, since (e.g., all) the content complies with glTF 2.0. The parser may (e.g., first) read the "scene" root property, which may reference the first item of the "scenes" root property. The first item may reference a single node of index 15, which may be the last node of the "nodes" root property. The last node may have a single child node of index 0. Starting from this node, the parser may retrieve (e.g., all) the body parts, e.g., as defined by example in Table 34. For the leaf parts, e.g., "face" or "jaw," a mesh may be referenced. For example, the node with name "face" may reference the mesh of index 0. In a (e.g., each) leaf case, the referenced mesh may have a single primitive and may use the accessor of index zero (0) for the vertices (e.g., the "POSITION" attribute). The faces (e.g., the "indices" property) may be different in each case. For example, the mesh with name "face" may reference the accessor of index one (1) for faces.

An application may use the parsing to obtain a complete avatar mesh made of triangles. If the application does not support an (e.g., any) extension, the application may (e.g., be assumed to) know how to use the mesh correctly, e.g., using other/third-party knowledge.

In the case where the application supports the (e.g., existing) extensions "MPEG_node_avatar" and "MSFT_lod," more features may be obtained from the glTF file, e.g., the mesh is an avatar mesh compliant with MPEG MORGAN, has 15 defined body parts, and there is a single level of details for the avatar.

Parsing may be performed by a compatible glTF parser. For example, a parser may start with the parsing of the "MPEG_avatar_lods" extension and find a single LOD. The level of details of the lod may be the highest possible, for example, because the "lod" property may be zero (0). There may be references to multiple (e.g., two) meshes. The first reference may reference the mesh of index 15 in the "nodes" root property (e.g., "meshGltf" property may be 15). If the application is not interested in or does not support the additional features of the extension, the application may build the avatar by using the reference using the parsing (e.g., as described herein). If the application is interested in and does support the additional features of the extension, the application may use the second mesh, which may reference to the mesh of index zero (0) in the "MPEG_avatar_nodes" extension (e.g., the "mesh" property may be zero (0)).

The parser may start from the avatar node of index zero (0). The parser may retrieve (e.g., all) the body parts, e.g., as defined in Table 34. For the leaf parts, e.g., "face" or "jaw," an avatar geometry may be referenced in the "MPEG avatar_geometries" extension. For example, the avatar node with name "face" may reference the avatar geometry of index zero (0). In a (e.g., each) leaf case, the referenced avatar geometry may reference the accessor of index zero (0) for its vertices (e.g., the "verticesGltf" property may be zero (0)), which may indicate that the basic glTF mesh and extended mesh share the same buffer for the vertices (e.g., there is no overhead). The faces, however, may be different in each case. For example, the mesh with name "face" may reference an avatar data index zero (0) in the "MPEG_avatar_rawdata" extension for its faces. Contrary to a basic (e.g., non-extended) glTF case, the faces may be made of quads and triangles. For example, tuples may be encoded in each case (e.g., the "type" property of each avatar data in the "MPEG_avatar_rawdata" extension may be "tuples").

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A device comprising:
   a processor configured to:

   determine that an avatar representation is associated with one or more extensions;
   parse a level of details (LOD) extension based on the determination that the avatar representation is associated with the one or more extensions;
   determine whether to obtain mesh data associated with the LOD extension from a first data container associated with a root node or a second data container associated with an extension node, wherein the first data container is associated with a first data format, and the second data container is associated with a second data format;
   obtain the mesh data associated with the LOD extension; and
   decode at least the mesh data associated with the LOD extension to generate the avatar representation.

2. The device of claim 1, wherein the mesh data associated with the LOD extension is obtained from the first data container based on a determination that a mesh graphics library transmission format (glTF) property is associated with the LOD extension, and wherein the first data format is glTF 2.0.

3. The device of claim 2, wherein the processor is further configured to determine that the mesh data associated with the LOD extension is in the first data format, glTF 2.0, based on the determination that the mesh glTF property is associated with the LOD extension.

4. The device of claim 3, wherein the processor is further configured to parse a glTF 2.0 file associated with the avatar representation to determine that the avatar representation is associated with the one or more extensions, and wherein the glTF 2.0 file comprises the first data container and the second data container.

5. The device of claim 1, wherein the second data container is configured for comprising data of a greater level of complexity than the first data container.

6. The device of claim 1, wherein the second data container is configured to comprise triangle-based mesh data and quad-based mesh data, and the first data container is configured to comprise the triangle-based mesh data and not the quad-based mesh data.

7. The device of claim 1, wherein the second data container comprises at least one data that is the same as data comprised by the first data container.

8. A device, comprising:
   a processor configured to:

   determine a subset of extensions associated with an avatar representation, wherein the subset of extensions comprises a level of details (LOD) extension;
   obtain a first version of mesh data associated with the LOD extension;
   obtain a second version of the mesh data;
   store the first version of the mesh data in a first data container and the second version of the mesh data in a second data container, wherein the first data container is associated with a first data format, and the second data container is associated with a second data format;
   include the first data container and the second data container in a file associated with the LOD extension; and
   send the file associated with the LOD extension.

9. The device of claim 8, wherein the first data container is associated with a root node of the avatar representation, and the second data container is associated with an extension node of the avatar representation, and wherein the second data container is configured for comprising data of a greater level of complexity than the first data container.

10. The device of claim 8, wherein the first data format is a graphics library transmission format (glTF), and the second data format is a non glTF format.

11. The device of claim 8, wherein the first version of the mesh data associated with the LOD extension is in the first data format, and the second version of the mesh data is in the second data format, wherein a property type indication is used to indicate whether the mesh data is in the first data format or the second data format, and wherein, based on a condition that a value of the property type indication indicates the mesh data is in the first data format, the first data container is used to comprise the mesh data, and, based on a condition that a value of the property type indication indicates the mesh data is in the second data format, the second data container is used to comprise the mesh data.

12. A method comprising:

determining that an avatar representation is associated with one or more extensions;
parsing a level of details (LOD) extension based on the determination that the avatar representation is associated with the one or more extensions;
determining whether to obtain mesh data associated with the LOD extension from a first data container associated with a root node or a second data container associated with an extension node, wherein the first data container is associated with a first data format, and the second data container is associated with a second data format;
obtaining the mesh data associated with the LOD extension; and
decoding at least the mesh data associated with the LOD extension to generate the avatar representation.

13. The method of claim 12, wherein the mesh data associated with the LOD extension is obtained from the first data container based on a determination that a mesh graphics library transmission format (glTF) property is associated with the LOD extension, and wherein the first data format is glTF 2.0.

14. A method, comprising:

determining a subset of extensions associated with an avatar representation, wherein the subset of extensions comprises a level of details (LOD) extension;
obtaining a first version of mesh data associated with the LOD extension;
obtaining a second version of the mesh data;
storing the first version of the mesh data in a first data container and the second version of the mesh data in a second data container, wherein the first data container is associated with a first data format, and the second data container is associated with a second data format;
including the first data container and the second data container in a file associated with the LOD extension; and
sending the file associated with the LOD extension.

15. The method of claim 14, wherein the first data container is associated with a root node of the avatar representation, and the second data container is associated with an extension node of the avatar representation.

FIG. 1A

EP 4 704 423 A1

FIG. 1B

**FIG. 1C**

**FIG. 1D**

**FIG. 2**

EP 4 704 423 A1

**300**

**FIG. 3**

EP 4 704 423 A1

**FIG. 4**

FIG. 5

**FIG. 6**

**FIG. 7**

**FIG. 8**

501 Parse glTF 2.0 and avatar extensions content

502 Has "MPEG_avatar_metadata" extension

true → 503 Parse "MPEG_avatar_metadata" extension

false

504 Has "MPEG_avatar_lods" extension

true → 505 For each *LOD* in "lods" in "MPEG_avatar_lods" — Parse *LOD*

false → 506 Parse glTF 2.0 content

507 End

**FIG. 9**

EP 4 704 423 A1

**701**

Parse *Controller*

**702**

Has "name" property — true → **703** Parse "name" property

false

**704**

Has "mapping" property — true → **705** Parse "mapping" property

false

**706**

Has "input" property — true → **707** Has "inputGltf" property — true → **708** Error

false

false → **709** Parse "input" property

**710**

Has "inputGltf" property — true → **711** Parse "inputGltf" property

false

**712**

For each *Channel* in "channels" property

Parse *Channel*

**713**

End

**FIG. 10**

**FIG. 11**

FIG. 12

**FIG. 13**

**FIG. 14**

**FIG. 15**

Europäisches
Patentamt

European
Patent Office

Office européen
des brevets

## EUROPEAN SEARCH REPORT

**Application Number**

EP 24 30 6429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUENTIN AVRIL (INTERDIGITAL) ET AL: "[SD] EE6 - Avatar Representation/Features and Support in Scene Description", 141. MPEG MEETING; 20230116 - 20230120; ONLINE; (MOTION PICTURE EXPERT GROUP OR ISO/IEC JTC1/SC29/WG11), , no. m61818 13 January 2023 (2023-01-13), XP030307482, Retrieved from the Internet: URL:https://dms.mpeg.expert/doc_end_user/d ocuments/141_OnLine/wg11/m61818-v2-m61818_ EE6-AvatarRepresentationFeaturesandSupport inSceneDescription.zip m61818_EE6 - Avatar RepresentationFeatures and Support in Scene Description.docx [retrieved on 2023-01-13] | 1-5,7-15 | INV. H04N21/234 H04N21/44 H04N21/81 H04N21/854 |
| Y | * the whole document * | 6 | |
| X | "Technologies under consideration for ISO/IEC 23090-14 Scene Description", 142. MPEG MEETING; 20230424 - 20230428; ANTALYA; (MOTION PICTURE EXPERT GROUP OR ISO/IEC JTC1/SC29/WG11), , no. n22652 10 May 2023 (2023-05-10), XP030310747, Retrieved from the Internet: URL:https://dms.mpeg.expert/doc_end_user/d ocuments/142_Antalya/wg11/MDS22652_WG03_N0 0909.zip WG3N00909/MDS22652_WG03_N00909.pdf [retrieved on 2023-05-10] * section 1.5 * | 1,8,12, 14 | TECHNICAL FIELDS SEARCHED (IPC) H04N G06T |

-/--

The present search report has been drawn up for all claims

| Place of search | Date of completion of the search | Examiner |
|---|---|---|
| The Hague | 6 February 2025 | Lefol, Damien |

EPO FORM 1503 03.82 (P04C01)

page 1 of 3

Europäisches Patentamt

European Patent Office

Office européen des brevets

# EUROPEAN SEARCH REPORT

**Application Number**

EP 24 30 6429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Procedures and Test Formats for Avatar Representation Formats as part of MPEG-I", 147. MPEG MEETING; 20240715 - 20240719; SAPPORO; (MOTION PICTURE EXPERT GROUP OR ISO/IEC JTC1/SC29/WG11), , no. n24162 26 July 2024 (2024-07-26), XP030320931, Retrieved from the Internet: URL:https://dms.mpeg.expert/doc_end_user/documents/147_Sapporo/wg11/MDS24162_WG03_N01316.zip WG03N1316_MDS24162_Procedures_Test_Avatar.docx [retrieved on 2024-07-26] * section 5.2 * | 1,5,7-9, 12,14,15 | |
| Y | "3rd Generation Partnership Project; Technical Specification Group Services and System Aspects ; Multimedia Codecs, Systems and Services; Avatar Representation and Communication; (Release 19)", 3GPP DRAFT; S4-241696, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 August 2024 (2024-08-23), XP052645960, Retrieved from the Internet: URL:https://www.3gpp.org/ftp/TSG_SA/WG4_CODEC/TSGS4_129-e/Docs/S4-241696.zip S4-241696_26.813_TR_on_Avatar_0.6.0_rm.docx [retrieved on 2024-08-23] * section 6 * | 6 | **TECHNICAL FIELDS SEARCHED (IPC)** |

-/--

The present search report has been drawn up for all claims

| Place of search | Date of completion of the search | Examiner |
|---|---|---|
| The Hague | 6 February 2025 | Lefol, Damien |

| | Europäisches Patentamt / European Patent Office / Office européen des brevets | **EUROPEAN SEARCH REPORT** | **Application Number** EP 24 30 6429 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Joao Regateiro  ET AL:  "m69421 - Avatar JSON Interchangeable Format", INTERNATIONAL ORGANISATION FOR STANDARDISATION ORGANISATION INTERNATIONALE DE NORMALISATION ISO/IEC JTC 1/SC 29/WG 3 CODING OF MOVING PICTURES AND AUDIO, 6 September 2024 (2024-09-06), XP093246673, Retrieved from the Internet: URL:https://dms.mpeg.expert/doc_end_user/documents/148_Kemer/wg11/m69421-v1-m69421_Avatar_JSON_Interchangeable_Format.zip * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 6 February 2025 | Lefol, Damien |

EPO FORM 1503 03.82 (P04C01)